# EUROPEAN PATENT APPLICATION

(11) **EP 4 712 585 A1**
(43) Date of publication of application: **18.03.2026**
(21) Application number: 24806137.6
(22) Date of filing: 28.02.2024
(51) Int. Cl.: H04W 52/02

(54) **INFORMATION TRANSMISSION METHOD AND APPARATUS, TERMINAL, AND NETWORK DEVICE**

(30) Priority: 12.05.2023 CN 202310536838
(71) Applicant: Datang Mobile Communications Equipment Co., Ltd., Beijing 100085 (CN)
(72) Inventor: LI, Yaomin, Beijing 100085 (CN); YANG, Meiying, Beijing 100085 (CN); WANG, Jiaqing, Beijing 100085 (CN)
(74) Representative: dompatent
(86) International application number: PCT/CN2024/078896
(87) International publication number: WO 2024/234776

(57) **Abstract**

This disclosure provides an information transmission method and apparatus, terminal and network device. The method is performed by a terminal and includes: receiving a target preamble signal, wherein the target preamble signal is used by the terminal to receive a first signal; and obtaining target synchronization information and/or resource location information of the first signal according to the target preamble signal.

## Description

### CROSS-REFERENCE TO RELATED APPLICATION

This application claims a priority to the Chinese patent application No. 202310536838.1 titled "INFORMATION TRANSMISSION METHOD AND APPARATUS, TERMINAL, AND NETWORK DEVICE" and filed in China on May 12, 2023, a disclosure of which is incorporated herein by reference in its entirety.

### TECHNICAL FIELD

The present disclosure relates to the field of communication technology, and in particular to an information transmission method and apparatus, terminal, and network device.

### BACKGROUND

The terminal power saving topic in Release 18 (Rel-18) introduces the concepts of low power wake up signal (LP-WUS) and low power wake up receiver (LP-WUR). These concepts further reduce terminal power consumption based on related energy-saving technologies. When there is no service transmission between the base station and the terminal, the main radio (MR) which consumes more power is turned off, while the LP-WUR is turned on to receive the low power signal from the base station. When there is service transmission, the base station activates the main radio via the LP-WUS to complete the service transmission. This significantly reduces the terminal's power consumption when there is no service transmission.

However, the receive sensitivity of LP-WUR is much lower than that of New Radio (NR) devices, and they may not have power-intensive components such as phase-locked loops (PLLs), which can lead to significant time/frequency deviations. This can affect the reception of low power wake up signals and, in turn, data transmission performance.

### SUMMARY

Embodiments of the present disclosure provide an information transmission method and apparatus, terminal, and network device to ensure the reception performance of a low power wake up signal and thus ensure the transmission performance of data.

In order to solve the above technical problems, an embodiment of the present disclosure provides an information transmission method, which is performed by a terminal, including:
receiving a target preamble signal, wherein the target preamble signal is used by the terminal to receive a first signal;
obtaining target synchronization information and/or resource location information of the first signal according to the target preamble signal.

In some embodiments, the target preamble signal includes: a first preamble signal and/or a second preamble signal;
the target synchronization information includes: first synchronization information and/or second synchronization information; wherein, the first synchronization information is determined according to the first preamble signal, and the second synchronization information is determined according to the second preamble signal; the first synchronization information and the second synchronization information indicate different respective synchronization accuracies.

In some embodiments, in a case that the target preamble signal includes the first preamble signal and the second preamble signal, obtaining the target synchronization information and/or the resource location information of the first signal according to the target preamble signal includes:
obtaining first synchronization information according to the first preamble signal;
obtaining the second synchronization information and/or the resource location information of the first signal according to the second preamble signal.

In some embodiments, in a case that the target preamble signal includes the second preamble signal, obtaining the target synchronization information and/or the resource location information of the first signal according to the target preamble signal includes:
obtaining the second synchronization information and/or the resource location information of the first signal according to the second preamble signal.

In some embodiments, obtaining resource location information of the first signal according to the second preamble signal includes:
determining the resource location information of the first signal according to first reception information corresponding to the second preamble signal.

In some embodiments, determining the resource location information of the first signal based on the first reception information corresponding to the second preamble signal includes at least one of the following:
determining a reception start position in the resource location information of the first signal based on a reception position in the first reception information corresponding to the second preamble signal; or
determining the resource location information of the first signal based on sequence information in the first reception information corresponding to the second preamble signal.

In some embodiments, the method further includes:
obtaining configuration parameters of resource locations of the first signal and the second preamble signal in a first manner;
wherein the first manner includes at least one of the following:
   as defined in a protocol, according to a radio resource control (RRC) configuration, as indicated by a control channel, or as indicated by a data channel.

In some embodiments, the configuration parameters of the resource locations of the first signal and the second preamble signal include at least one of the following:
a time domain start position offset of the second preamble signal relative to the first signal;
a frequency domain start position offset of the second preamble signal relative to the first signal;
a relationship between periods of the second preamble signal and the first signal;
a time domain symbol pattern occupied by the second preamble signal in transmission resources;
a time domain symbol pattern occupied by the first signal in transmission resources;
a frequency domain subcarrier pattern occupied by the second preamble signal in transmission resources; or
a frequency domain subcarrier pattern occupied by the first signal in transmission resources.

In some embodiments, the method further includes:
in a case that the second preamble signal is successfully received at a resource location corresponding to the second preamble signal, determining to receive the first signal at a resource location of the first signal.

In some embodiments, in a case that the target preamble signal includes the first preamble signal, obtaining the target synchronization information and/or the resource location information of the first signal according to the target preamble signal includes:
obtaining the first synchronization information according to the first preamble signal.

In some embodiments, the method further includes:
obtaining a configuration parameter of a resource location of the first signal in a second manner;
wherein the second manner includes at least one of the following:
   as defined in a protocol, according to an RRC configuration, as indicated by a control channel, or as indicated by a data channel.

In some embodiments, the method further includes:
receiving target configuration information of the target preamble signal;
wherein the target configuration information includes first configuration information and/or second configuration information;
the first configuration information is used for configuring the first preamble signal;
the second configuration information is used for configuring the second preamble signal.

In some embodiments, in a case that the target configuration information includes the first configuration information and the second configuration information, the first configuration information and the second configuration information satisfy at least one of the following:
the first configuration information and the second configuration information are configured separately; or
one of the first configuration information and the second configuration information is determined based on the other of the first configuration information and the second configuration information and an association configuration parameter.

In some embodiments, the association configuration parameter includes at least one of the following:
a time domain offset of the first preamble signal relative to the second preamble signal;
a frequency domain offset of the first preamble signal relative to the second preamble signal; or
a relationship between reception periods of the first preamble signal and the second preamble signal.

In some embodiments, the target configuration information includes at least one of the following:
reception period;
time domain duration;
frequency domain duration;
time domain start position;
frequency domain start position;
time domain end position;
frequency domain end position; or
a reception window parameter for an aperiodic signal.

In some embodiments, the target configuration information is configured based on at least one of the following:
configured per terminal;
configured per terminal group; or
configured per cell.

In some embodiments, the target configuration information is obtained in at least one of the following manners:
as defined in a protocol, as configured by RRC signaling, as configured by a control channel, or as configured by a data channel.

In some embodiments, in a case that the target preamble signal includes the first preamble signal and the second preamble signal, the method further includes at least one of the following:
determining resource location information of the second preamble signal according to the first preamble signal; or
determining second reception information corresponding to the first signal according to the first preamble signal.

In some embodiments, when the target preamble signal includes the first preamble signal, the method further includes:
determining second reception information corresponding to the first signal according to the first preamble signal.

In some embodiments, the second reception information corresponding to the first signal includes at least one of the following:
a length of the first signal;
a code rate of the first signal;
the first signal is received at a resource location of the first signal; or
the resource location of the first signal is skipped.

In some embodiments, the method further includes at least one of the following:
obtaining a configuration parameter of a resource location of the first signal in a third manner, and determining the resource location information of the first signal according to the configuration parameter of the resource location; or
determining the resource location information of the first signal according to a resource location of the first preamble signal;
wherein the third manner includes at least one of the following:
   as defined in a protocol, according to an RRC configuration, as indicated by a control channel, or as indicated by a data channel.

In some embodiments, the configuration parameter of the resource location of the first signal includes at least one of the following:
a reception period of the first signal;
a time domain position parameter of the first signal;
a frequency domain position parameter of the first signal;
a length of the first signal; or
a reception window parameter for an aperiodic first signal.

In some embodiments, the reception window parameter includes at least one of the following:
window period, duration, window start time, or reception window valid time.

In some embodiments, the reception window valid time is used for indicating one or more of a time length for receiving the first preamble signal in a reception window, a time length for receiving the second preamble signal in a reception window, and a time length for receiving the first signal in a reception window.

In some embodiments, determining the second reception information corresponding to the first signal according to the first preamble signal includes at least one of the following:
determining the second reception information corresponding to the first signal according to a signal format of the first preamble signal;
determining the second reception information corresponding to the first signal according to a resource location of the first preamble signal;
determining the second reception information corresponding to the first signal according to the resource location and the signal format of the first preamble signal; or
determining the second reception information corresponding to the first signal according to a reception rule for the first preamble signal.

In some embodiments, the reception rule for the first preamble signal includes at least one of the following:
when the number of times the first preamble signal is received within a time window is greater than or equal to a first threshold, determining that the first signal is received at a resource location of the first signal;
when the number of times the first preamble signal is received within a time window is less than a second threshold, determining that the first signal is received at the resource location of the first signal;
when the number of times the first preamble signal is received within a time window is less than the first threshold, determining that the first signal is not received at the resource location of the first signal;
when the number of times the first preamble signal is received within a time window is greater than or equal to the second threshold, determining that the first signal is not received at the resource location of the first signal;
when a received power of the first preamble signal is greater than or equal to a third threshold, determining that the first signal is received at the resource location of the first signal;
when the received power of the first preamble signal is less than a fourth threshold, determining that the first signal is received at the resource location of the first signal;
when the received power of the first preamble signal is less than the third threshold, determining that the first signal is not received at the resource location of the first signal; or
when the received power of the first preamble signal is greater than or equal to the fourth threshold, determining that the first signal is not received at the resource location of the first signal.

In some embodiments, the synchronization accuracy of the first synchronization information includes at least one of the following:
a reception time domain deviation of the target preamble signal and/or the first signal meets an eleventh threshold;
a reception frequency domain deviation of the target preamble signal and/or the first signal meets a twelfth threshold;
a false alarm probability of the target preamble signal and/or the first signal meets a thirteenth threshold; or
a missed detection probability of the target preamble signal and/or the first signal meets a fourteenth threshold;
   and/or
the synchronization accuracy of the second synchronization information includes at least one of the following:
   the reception time domain deviation of the target preamble signal and/or the first signal meets a fifteenth threshold;
   the reception frequency domain deviation of the target preamble signal and/or the first signal meets a sixteenth threshold;
   the false alarm probability of the target preamble signal and/or the first signal meets a seventeenth threshold; or
   the missed detection probability of the target preamble signal and/or the first signal meets an eighteenth threshold;
   wherein, the eleventh threshold is greater than the fifteenth threshold, the twelfth threshold is greater than the sixteenth threshold, the thirteenth threshold is greater than the seventeenth threshold, and the fourteenth threshold is greater than the eighteenth threshold.

In some embodiments, the method further includes:
sending a parameter related to a receiving capability of a low power wake up receiver and/or a measurement parameter to a network device.

In some embodiments, the parameter related to the receiving capability of the low power wake up receiver includes at least one of the following:
receiver type;
receiver sensitivity;
received signal type;
receiver bandwidth; or
signal receiving frequency.

In some embodiments, the measurement parameter includes at least one of the following:
a reference signal received power of the target preamble signal and/or a second signal; or
a reference signal received quality of the target preamble signal and/or the second signal.

In some embodiments, the second signal includes at least one of the following:
synchronization signal/PBCH block; or
channel state information reference signal.

In some embodiments, the first signal includes a wake up signal.

In some embodiments, the target preamble signal includes at least one of the following: a reference signal, a synchronization signal, a dedicated signal for a low power wake up receiver, downlink data, or a control signal; and/or
the first signal includes at least one of the following: a reference signal, a synchronization signal, a dedicated signal for a low power wake up receiver, downlink data, or a control signal.

An embodiment of the present disclosure also provides an information transmission method, which is performed by a network device and includes:
sending a target preamble signal to a terminal;
wherein the target preamble signal is used by the terminal to receive a first signal.

In some embodiments, the target preamble signal includes a first preamble signal and/or a second preamble signal;
the target synchronization information includes: first synchronization information and/or second synchronization information; wherein, the first synchronization information is determined according to the first preamble signal, and the second synchronization information is determined according to the second preamble signal; the first synchronization information and the second synchronization information indicate different respective synchronization accuracies.

In some embodiments, the method further includes:
sending configuration parameters of resource locations of the first signal and the second preamble signal to the terminal through a first signaling;
wherein the first signaling includes at least one of the following:
   radio resource control (RRC) signaling, a control channel, or a data channel.

In some embodiments, the configuration parameters of the resource locations of the first signal and the second preamble signal include at least one of the following:
a time domain start position offset of the second preamble signal relative to the first signal;
a frequency domain start position offset of the second preamble signal relative to the first signal;
a relationship between periods of the second preamble signal and the first signal;
a time domain symbol pattern occupied by the second preamble signal and/or the first signal in transmission resources; or
a frequency domain subcarrier pattern occupied by the second preamble signal and/or the first signal in transmission resources.

In some embodiments, the method further includes:
sending a configuration parameter of a resource location of the first signal to the terminal through a target object;
wherein the target object includes at least one of the following:
   radio resource control (RRC) signaling, a control channel, or a data channel.

In some embodiments, the configuration parameter of the resource location of the first signal includes at least one of the following:
a reception period of the first signal;
a time domain position parameter of the first signal;
a frequency domain position parameter of the first signal;
a length of the first signal; or
a reception window parameter for an aperiodic first signal.

In some embodiments, the reception window parameter includes at least one of the following:
window period, duration, window start time, or reception window valid time.

In some embodiments, the reception window valid time is used for indicating one or more of a time length for receiving the first preamble signal in a reception window, a time length for receiving the second preamble signal in a reception window, and a time length for receiving the first signal in a reception window.

In some embodiments, the method further includes:
sending target configuration information of a target preamble signal to the terminal;
wherein the target configuration information includes first configuration information and/or second configuration information;
the first configuration information is used for configuring the first preamble signal;
the second configuration information is used for configuring the second preamble signal.

In some embodiments, in a case that the target configuration information includes the first configuration information and the second configuration information, the first configuration information and the second configuration information satisfy at least one of the following:
the first configuration information and the second configuration information are configured separately; or
one of the first configuration information and the second configuration information is determined based on the other of the first configuration information and the second configuration information and an association configuration parameter.

In some embodiments, the association configuration parameter includes at least one of the following:
a time domain offset of the first preamble signal relative to the second preamble signal;
a frequency domain offset of the first preamble signal relative to the second preamble signal; or
a relationship between reception periods of the first preamble signal and the second preamble signal.

In some embodiments, the target configuration information includes at least one of the following:
reception period;
time domain duration;
frequency domain duration;
time domain start position;
frequency domain start position;
time domain end position;
frequency domain end position; or
a reception window parameter for an aperiodic signal.

In some embodiments, the target configuration information is configured based on at least one of the following:
configured per terminal;
configured per terminal group; or
configured per cell.

In some embodiments, the synchronization accuracy of the first synchronization information includes at least one of the following:
a reception time domain deviation of the target preamble signal and/or the first signal meets an eleventh threshold;
a reception frequency domain deviation of the target preamble signal and/or the first signal meets a twelfth threshold;
a false alarm probability of the target preamble signal and/or the first signal meets a thirteenth threshold; or
a missed detection probability of the target preamble signal and/or the first signal meets a fourteenth threshold;
   and/or
the synchronization accuracy of the second synchronization information includes at least one of the following:
   the reception time domain deviation of the target preamble signal and/or the first signal meets a fifteenth threshold;
   the reception frequency domain deviation of the target preamble signal and/or the first signal meets a sixteenth threshold;
   the false alarm probability of the target preamble signal and/or the first signal meets a seventeenth threshold; or
   the missed detection probability of the target preamble signal and/or the first signal meets an eighteenth threshold;
   wherein, the eleventh threshold is greater than the fifteenth threshold, the twelfth threshold is greater than the sixteenth threshold, the thirteenth threshold is greater than the seventeenth threshold, and the fourteenth threshold is greater than the eighteenth threshold.

In some embodiments, the method further includes:
receiving a parameter related to a receiving capability of a low power wake up receiver and/or a measurement parameter from the terminal.

In some embodiments, the parameter related to the receiving capability of the low power wake up receiver includes at least one of the following:
receiver type;
receiver sensitivity;
received signal type;
receiver bandwidth; or
signal receiving frequency.

In some embodiments, the measurement parameter includes at least one of the following:
a reference signal received power of the target preamble signal and/or a second signal; or
a reference signal received quality of the target preamble signal and/or the second signal.

In some embodiments, the second signal includes at least one of the following:
synchronization signal/PBCH block; or
channel state information reference signal.

In some embodiments, in a case that the target preamble signal includes the first preamble signal, sending the target preamble signal to the terminal includes:
sending the first preamble signal to the terminal periodically or aperiodically.

In some embodiments, sending the first preamble signal to the terminal aperiodically includes:
periodically sending the first preamble signal in a first window that is defined in a protocol or preconfigured;
wherein a start position of the first window is determined by a service arrival time, and an end time of the first window is determined by the maximum number of times the first preamble signal is sent and/or the time when an uplink signal sent by the terminal is received.

In some embodiments, in a case that the target preamble signal includes the second preamble signal, sending the target preamble signal to the terminal includes:
sending the second preamble signal to the terminal periodically or aperiodically.

In some embodiments, sending the second preamble signal to the terminal aperiodically includes:
periodically sending the second preamble signal in a second window that is defined in a protocol or preconfigured;
wherein a start position of the second window is determined by a service arrival time, and an end time of the second window is determined by the maximum number of times the second preamble signal is sent and/or the time when an uplink signal sent by the terminal is received.

In some embodiments, in a case that the target preamble signal includes the first preamble signal and the second preamble signal, sending the target preamble signal to the terminal includes:
sending the first preamble signal and the second preamble signal separately to the terminal.

In some embodiments, the method further includes:
sending the first signal to the terminal periodically or aperiodically.

In some embodiments, sending the first signal to the terminal aperiodically includes:
periodically sending the first signal in a third window that is defined in a protocol or preconfigured;
wherein a start position of the third window is determined by a service arrival time, and an end time of the third window is determined by the maximum number of times the first signal is sent and/or the time when an uplink signal sent by the terminal is received.

In some embodiments, the first signal includes a wake up signal.

In some embodiments, the target preamble signal includes at least one of the following: a reference signal, a synchronization signal, a dedicated signal for a low power wake up receiver, downlink data, or a control signal; and/or
the first signal includes at least one of the following: a reference signal, a synchronization signal, a dedicated signal for a low power wake up receiver, downlink data, or a control signal.

An embodiment of the present disclosure also provides a terminal, including a memory, a transceiver, and a processor;
wherein the memory is configured to store a computer program; the transceiver is configured to transmit and receive data under the control of the processor; and the processor is configured to read the computer program in the memory and perform the following steps:
receiving a target preamble signal through the transceiver, wherein the target preamble signal is used by the terminal to receive a first signal; and
obtaining target synchronization information and/or resource location information of the first signal according to the target preamble signal.

In some embodiments, the target preamble signal includes a first preamble signal and/or a second preamble signal;
the target synchronization information includes first synchronization information and/or second synchronization information; wherein, the first synchronization information is determined according to the first preamble signal, and the second synchronization information is determined according to the second preamble signal; the first synchronization information and the second synchronization information indicate different respective synchronization accuracies.

An embodiment of the present disclosure also provides a network device, including a memory, a transceiver, and a processor;
wherein the memory is configured to store a computer program; the transceiver is configured to transmit and receive data under the control of the processor; and the processor is configured to read the computer program in the memory and perform the following steps:
sending a target preamble signal to a terminal via the transceiver;
wherein the target preamble signal is used by the terminal to receive a first signal.

An embodiment of the present disclosure also provides an information transmission apparatus, which is applied to a terminal and includes:
a first receiving unit, configured to receive a target preamble signal, wherein the target preamble signal is used by the terminal to receive a first signal; and
a first obtaining unit, configured to obtain target synchronization information and/or resource location information of the first signal according to the target preamble signal.

An embodiment of the present disclosure also provides an information transmission apparatus, which is applied to a network device and includes:
a first sending unit, configured to send a target preamble signal to a terminal;
wherein the target preamble signal is used by the terminal to receive a first signal.

An embodiment of the present disclosure further provides a processor-readable storage medium, wherein the processor-readable storage medium stores a computer program, and the computer program is used to cause the processor to execute the above methods.

The present disclosure has the following beneficial effects: the above scheme ensures the reception performance of the first signal and further ensures the data transmission performance by receiving the target preamble signal used by the terminal to receive the first signal and obtaining the target synchronization information and/or the resource location information of the first signal according to the target preamble signal.

### BRIEF DESCRIPTION OF THE DRAWINGS

In order to more clearly illustrate the technical solutions in the embodiments of the present disclosure or related technologies, the following briefly introduces the drawings required for use in the embodiments or related technical descriptions. Obviously, the drawings described below are only some embodiments recorded in the present disclosure. For ordinary technicians in this field, other drawings can be obtained based on these drawings without paying any creative labor.
Fig. 1 is a structural diagram of a network system to which embodiments of the present disclosure are applicable;
Fig. 2 shows a flow chart of an information transmission method according to an embodiment of the present disclosure;
Fig. 3 shows another flow chart of an information transmission method according to an embodiment of the present disclosure;
Fig. 4 shows a block diagram of an information transmission apparatus according to an embodiment of the present disclosure;
Fig. 5 shows a structural diagram of a terminal according to an embodiment of the present disclosure;
Fig. 6 shows another block diagram of an information transmission apparatus according to an embodiment of the present disclosure;
Fig. 7 shows a structural diagram of a network device according to an embodiment of the present disclosure.

### DETAILED DESCRIPTION

The following will clearly and completely describe the technical solutions in the embodiments of the present disclosure in conjunction with the accompanying drawings. Obviously, the described embodiments are only part of the embodiments of the present disclosure, not all of them. All other embodiments obtained by ordinary technicians in this field based on the embodiments of the present disclosure without making any creative efforts shall fall within the scope of the present disclosure.

The terms "first", "second", and the like in the specification and claims of the present disclosure are used to distinguish similar objects and are not necessarily used to describe a particular order or sequential sequence. It should be understood that the terms used in this manner are interchangeable where appropriate so that the embodiments of the present disclosure described herein may be implemented in a sequence other than those illustrated or described herein. In addition, the terms "including" and "having", and any variations thereof, are intended to cover non-exclusive inclusions, e.g., a process, method, system, product, or apparatus including a series of steps or units is not necessarily limited to those steps or units explicitly listed, but may include other steps or units that are not explicitly listed or that are inherent to such processes, methods, products, or apparatus.

In embodiments of the present disclosure, the term "and/or" describes the association relationship between associated objects, indicating that three relationships can exist. For example, A and/or B can represent three situations: A exists alone, A and B exist simultaneously, and B exists alone. The character "/" generally indicates that the associated objects are in an "or" relationship. In the embodiments of the present disclosure, the term "plurality" refers to two or more, and other quantifiers are similar.

In the embodiments of the present disclosure, words such as "exemplary" or "for example" are used to indicate examples, illustrations, or descriptions. Any embodiment or design described as "exemplary" or "for example" in the embodiments of the present disclosure should not be construed as being preferred or advantageous over other embodiments or designs. Rather, the use of words such as "exemplary" or "for example" is intended to present the relevant concepts in a concrete manner.

The following is a brief description of the relevant concepts mentioned in this disclosure.

Based on the latest RAN#112 meeting conclusions, LP-WUR obtains and receives synchronization information of wake up signals through periodic or aperiodic signals. Optional signal design methods include: the signal can be part of the wake up signal, can be sent independently of the wake up signal, or can be a combination of the above two methods.

When a terminal initially accesses a cell, the terminal does not know the carrier's time and frequency information. The terminal blindly detects the Synchronization Signal/PBCH Block (SSB) signal in both time and frequency domains at a default period of 20ms to obtain time and frequency synchronization information. In time domain, the terminal receives synchronization signals, including the Primary Synchronization Signal (PSS) and the Secondary Synchronization Signal (SSS). The terminal receives the PSS for coarse synchronization and further receives the SSS for precise synchronization. In frequency domain, the terminal detects the SSB according to the synchronization grid specified by a protocol.

The LP-WUR uses the ultra-low power wake up signal to determine whether to wake up the MR, assisting the terminal in entering an ultra-low power state to achieve significant energy savings. However, the architecture of the low power wake up receiver and the method for receiving the ultra-low power signal when the MR is in an ultra-low power state are not yet defined in the NR system. Therefore, the following issues need to be further considered:
1) When MR is in a sleep state with very low power consumption, and experiences large frequency and clock drift and cannot obtain synchronization information through NR synchronization signals, how does the LP-WUR determine the position for receiving the low power wake up signal.
2) Different types of receivers have different synchronization requirements for signal reception, and the manners of sending and receiving synchronization signals also vary. Receivers with high synchronization requirements (baseband-based envelope detection receivers) require periodic synchronization signals to calibrate the receiver's crystal oscillator and phase-locked loop (PLL). However, for receivers with lower synchronization requirements (radio frequency (RF)-based frequency-amplitude conversion receivers), the LP-WUR can receive the on-demand wake up signal from the base station through continuous receiving, eliminating the resource overhead of additional periodic synchronization signals.

The following describes embodiments of the present disclosure with reference to the accompanying drawings. The information transmission methods, apparatuses, terminal, and network device provided in the embodiments of the present disclosure can be applied to wireless communication systems. The wireless communication systems may be systems employing fifth-generation (5G) mobile communication technology (hereinafter referred to as 5G systems). Those skilled in the art will appreciate that the 5G NR system is merely an example and not a limitation.

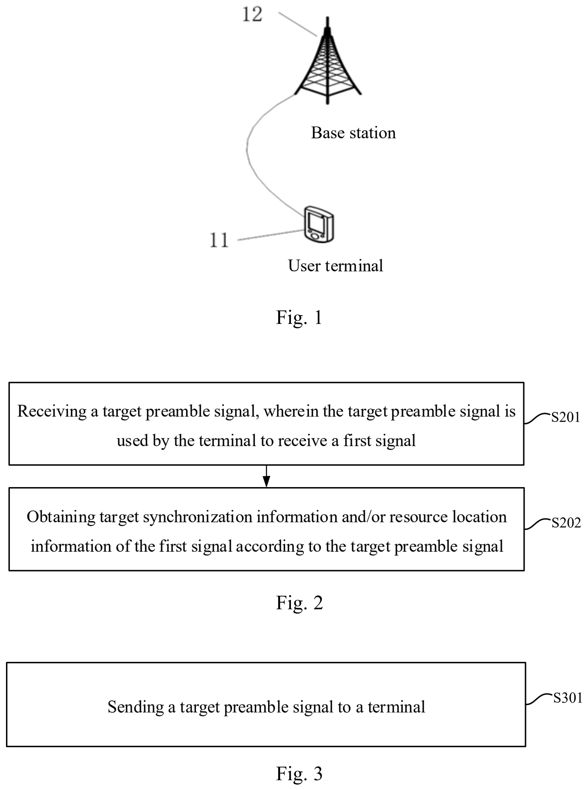

Referring to Fig. 1, Fig. 1 is a structural diagram of a network system to which embodiments of the present disclosure are applicable. As shown in Fig. 1, the network system includes a user terminal 11 and a base station 12. The user terminal 11 may be a user equipment (UE), e.g., a mobile phone, tablet computer, laptop computer, personal digital assistant (PDA), mobile internet device (MID), or wearable device. It should be noted that the specific type of user terminal 11 is not limited in the embodiments of the present disclosure. The base station 12 may be a 5G base station or later base station (e.g., gNB, 5G NR NB), or a base station in other communication systems, or referred to as a Node B. It should be noted that the embodiments of the present disclosure use a 5G base station as an example, but the specific type of base station 12 is not limited.

Embodiments of the present disclosure provide an information transmission method and apparatus, terminal, and network device to ensure the reception performance of a low power wake up signal and thus ensure the transmission performance of data.

The method and the device are based on the same application concept. Since the principles of solving problems by the method and the device are similar, for the implementation of one of the device and the method, references may be made to the other of the device and the method, and the repeated parts will not be repeated.

As shown in Fig. 2, an embodiment of the present disclosure provides an information transmission method, which is performed by a terminal and includes steps S201 and S202.

Step S201: receiving a target preamble signal, wherein the target preamble signal is used by the terminal to receive a first signal.

It can be understood that information determined from the current preamble signal is used to assist the terminal in receiving the first signal.

Step 202: obtaining target synchronization information and/or resource location information of the first signal according to the target preamble signal.

In some embodiments, in one implementation, the target preamble signal includes at least one of the following: a reference signal, a synchronization signal, a dedicated signal for a low power wake up receiver, downlink data, or a control signal.

In some embodiments, in one implementation, the first signal is a wake up signal; in some embodiments, the first signal includes at least one of the following: a reference signal, a synchronization signal, a dedicated signal for a low power wake up receiver, downlink data, or a control signal.

It should be noted that the dedicated signal for the low power wake up receiver may include: Low Power Discovery Signal (LP-DRS), Low Power Synchronizing Signal (LP-SS), and Low Power Wake Up Signal (LP-WUS).

In some embodiments, the target preamble signal includes: a first preamble signal and/or a second preamble signal;
the target synchronization information is used for receiving the first signal, and the target synchronization information includes: first synchronization information and/or second synchronization information; wherein, the first synchronization information is determined based on the first leading signal, and the second synchronization information is determined based on the second leading signal; the first synchronization information and the second synchronization information indicate different respective synchronization accuracies.

In some embodiments, the synchronization accuracy of the first synchronization information includes at least one of the following:
A11: a reception time domain deviation of the target preamble signal and/or the first signal meets an eleventh threshold;
A12. a reception frequency domain deviation of the target preamble signal and/or the first signal meets a twelfth threshold;
A13: a false alarm probability of the target preamble signal and/or the first signal meets a thirteenth threshold; or
A14. a missed detection probability of the target preamble signal and/or the first signal meets a fourteenth threshold.

In some embodiments, the synchronization accuracy of the second synchronization information includes at least one of the following:
A21. a reception time domain deviation of the target preamble signal and/or the first signal meets a fifteenth threshold;
A22. a reception frequency domain deviation of the target preamble signal and/or the first signal meets a sixteenth threshold;
A23. a false alarm probability of the target preamble signal and/or the first signal meets a seventeenth threshold; or
A24. a missed detection probability of the target preamble signal and/or the first signal meets an eighteenth threshold.

It should be noted that the eleventh threshold is greater than the fifteenth threshold, the twelfth threshold is greater than the sixteenth threshold, the thirteenth threshold is greater than the seventeenth threshold, and the fourteenth threshold is greater than the eighteenth threshold.

From the above-mentioned definitions of synchronization accuracy, one of the first synchronization information and the second synchronization information has lower synchronization accuracy, and the other has higher synchronization accuracy; for example, the first synchronization information can be understood as low-accuracy synchronization information, that is, coarse synchronization information, and the second synchronization information can be understood as high-accuracy synchronization information, that is, precise synchronization information.

The above implementation is described in detail below from the perspectives of different signals included in the target preamble signal.

1. The target preamble signal includes: a first preamble signal and a second preamble signal.

In some embodiments, in this case, the specific implementation of obtaining the target synchronization information and/or the resource location information of the first signal according to the target preamble signal includes:
obtaining first synchronization information according to the first preamble signal;
obtaining the second synchronization information and/or the resource location information of the first signal according to the second preamble signal.

In this case, a first specific implementation may be: the terminal needs to obtain the first synchronization information based on the first preamble signal. At this time, the terminal is already able to achieve coarse synchronization. Then, when the terminal receives the second preamble signal, the terminal does not need to obtain the second synchronization information, but directly obtains the resource location information of the first signal based on the second preamble signal. A second specific implementation may be: the terminal needs to obtain the first synchronization information based on the first preamble signal. In order to ensure synchronization accuracy, the terminal continues to obtain the second synchronization information when the second preamble signal is received. The second specific implementation may be: the terminal needs to obtain the first synchronization information based on the first preamble signal. In order to ensure synchronization accuracy, the terminal continues to obtain the second synchronization information when the second preamble signal is received, and at the same time obtains the resource location information of the first signal based on the second preamble signal.

In some embodiments, in one implementation, the specific implementation of obtaining the resource location information of the first signal according to the second preamble signal includes:
determining the resource location information of the first signal according to first reception information corresponding to the second preamble signal.

In some embodiments, the first reception information may be a reception position, a reception sequence, etc.; in some embodiments, the specific implementation of determining the resource location information of the first signal according to the first reception information corresponding to the second preamble signal includes at least one of the following:
B11. determining a reception start position in the resource location information of the first signal based on the reception position in the first reception information corresponding to the second preamble signal; or
B12. determining the resource location information of the first signal based on sequence information in the first reception information corresponding to the second preamble signal.

For example, when the second preamble signal corresponds to a sequence 1, the time domain and/or frequency domain duration of the first signal is M1 orthogonal frequency division multiplex (OFDM) symbols/N1 subcarriers (SC), ... ; when the second preamble signal corresponds to a sequence N, the time domain and/or frequency domain duration of the first signal is Mn OFDM symbols/Nn SCs, and so on.

For example, when the second preamble signal corresponds to a sequence 1, the duration of the first signal is K1 bits, ... ; and when the second preamble signal corresponds to a sequence N, the duration of the first signal is Kn bits.

Sequence 1 to sequence N can be obtained through definitions in a protocol, a radio resource control (RRC) configuration, a control channel, and a data channel.

It should be noted that, in order to accurately receive the first signal and the second preamble signal, in some embodiments, in one implementation, the method further includes:
obtaining configuration parameters of resource locations of the first signal and the second preamble signal in a first manner;
wherein the first manner includes at least one of the following:
   as defined in a protocol, according to an RRC configuration, as indicated by a control channel, or as indicated by a data channel.

In some embodiments, the configuration parameters of the resource locations of the first signal and the second preamble signal include at least one of the following:
B21, a time domain start position offset of the second preamble signal relative to the first signal;
B22, a frequency domain start position offset of the second preamble signal relative to the first signal;
B23, a relationship between the period of the second preamble signal and the period of the first signal; for example, the period of the first signal =N*the period of the second preamble signal;
B24, a time domain symbol pattern occupied by the second preamble signal in transmission resources;
B25, a time domain symbol pattern occupied by the first signal in transmission resources; for example, the first K OFDM symbols are the second preamble signal, and the last N-K OFDM symbols are the first signal;
B26, a frequency domain subcarrier pattern occupied by the second preamble signal in transmission resources; or
B27, a frequency domain subcarrier pattern occupied by the first signal in transmission resources; for example, the first M segments of subcarriers (first M segments of SCs) are the second preamble signal, and the last Y-M segments of subcarriers (last (Y-M) segments of SCs) are the first signal.

In some embodiments, the terminal may further determine whether to receive the first signal based on the second preamble signal. In one implementation, the method further includes:
in a case that the second preamble signal is successfully received at a resource location corresponding to the second preamble signal, determining to receive the first signal at a resource location of the first signal; otherwise, determining not to receive the first signal at the resource location of the first signal.

In some embodiments, in this case, the above method may further include at least one of the following:
determining resource location information of the second preamble signal according to the first preamble signal; or
determining second reception information corresponding to the first signal according to the first preamble signal.

In some embodiments, the second reception information corresponding to the first signal includes at least one of the following:
B31, a length of the first signal;
B32, a code rate of the first signal;
B33, the first signal is received at a resource location of the first signal; this situation can be understood as receiving the first signal; or
B34, the resource location of the first signal is skipped; this situation can be understood as not receiving the first signal.

In some embodiments, when the terminal does not obtain the resource location information of the first signal based on the second preamble signal, the method further includes at least one of the following B41 and B42.

B41. obtaining a configuration parameter of a resource location of the first signal in a third manner, and determining the resource location information of the first signal according to the configuration parameter of the resource location;
wherein the third manner includes at least one of the following:
as defined in a protocol, according to an RRC configuration, as indicated by a control channel, or as indicated by a data channel.

It should be noted that the resource location information of the first signal in this case is determined by a protocol, according to an RRC configuration, as indicated by a control channel, or as indicated by a data channel.

In some embodiments, the configuration parameter of the resource location of the first signal includes at least one of the following:
B411, a reception period of the first signal;
B412, a time domain position parameter of the first signal; for example, the time domain position parameter includes at least one of the following: a start position, an end position, a duration, and a time domain position pattern;
B413, a frequency domain position parameter of the first signal; for example, the frequency domain position parameter includes at least one of the following: a start position, an end position, a duration, and a frequency domain position pattern;
B414, a length of the first signal; for example, a length of the first signal is M bits;
B415, a reception window parameter of the aperiodic first signal; in some embodiments, the reception window parameter includes at least one of the following: window period, duration, window start time, or reception window valid time.

It should be noted here that the reception window valid time is used for indicating: a time length for receiving the first preamble signal in a reception window, a time length for receiving the second preamble signal in a reception window, and/or a time length for receiving the first signal in a reception window; that is, the terminal receives the first preamble signal, the second preamble signal and/or the first signal within a specific time in this window, and the window parameters are invalid outside the specific time.

B42. determining the resource location information of the first signal according to the resource location of the first preamble signal.

It should be noted that, in this case, the resource location information of the first signal is determined from the first preamble signal; the resource location of the first preamble signal may include: the time domain position and/or frequency domain position of the first preamble signal.

For example, the terminal determines the resource location information of the first signal based on the offset between the time domain position and/or frequency domain position of the first signal and the time domain position and/or frequency domain position of the first preamble signal.

For example, the terminal determines the resource location information of the first signal based on the relationship between the periods of the first signal and the first preamble signal.

In some embodiments, in one implementation, determining the second reception information corresponding to the first signal according to the first preamble signal includes at least one of the following B51 to B54.

B51. determining second reception information corresponding to the first signal according to the signal format of the first preamble signal.

It should be noted that the signal format may be a predefined and/or preconfigured sequence of the first signal; for example, if the first preamble signal corresponds to a sequence 0, it indicates that there is transmission of the first signal; if the first preamble signal corresponds to a sequence 1, it indicates that there is no transmission of the first signal.

B52. determining second reception information corresponding to the first signal according to the resource location of the first preamble signal.

It should be noted that the resource location may include: a frequency domain position and/or a time domain position. For example, if the terminal receives the first preamble signal at a predefined frequency domain position and/or time domain position, it indicates that there is transmission of the first signal; otherwise, there is no transmission of the first signal.

B53. determining second reception information corresponding to the first signal according to the resource location and signal format of the first preamble signal.

It should be noted that this situation is the combined application of the above-mentioned B51 and B52.

B54. determining second reception information corresponding to the first signal according to a reception rule for the first preamble signal.

In some embodiments, the reception rule for the first preamble signal includes at least one of the following:
B541: when the number of times the first preamble signal is received within a time window is greater than or equal to a first threshold, determining that the first signal is received at the resource location of the first signal;
B542: when the number of times the first preamble signal is received within a time window is less than the first threshold, determining that the first signal is not received at the resource location of the first signal; it should be noted that the length of the time window and the first threshold can be predefined in a protocol or pre-configured;
B543: when the number of times the first preamble signal is received within a time window is greater than or equal to the second threshold, determining that the first signal is not received at the resource location of the first signal;
B544: when the number of times the first preamble signal is received within a time window is less than a second threshold, determining that the first signal is received at the resource location of the first signal; it should be noted that the length of the time window and the second threshold can be predefined in a protocol or pre-configured; it should be noted that the first threshold and the second threshold may be the same or different; in some embodiments, when the first threshold and the second threshold are the same, B543 and B544 are the opposite of B541 and B542;
B545: when a received power of the first preamble signal is greater than or equal to a third threshold, determining that the first signal is received at the resource location of the first signal;
B546: when the received power of the first preamble signal is less than the third threshold, determining that the first signal is not received at the resource location of the first signal; it should be noted that the length of the time window and the third threshold can be predefined in a protocol or pre-configured;
B547: when the received power of the first preamble signal is less than a fourth threshold, determining that the first signal is received at the resource location of the first signal;
B548: when the received power of the first preamble signal is greater than or equal to the fourth threshold, determining that the first signal is not received at the resource location of the first signal; it should be noted that the length of the time window and the fourth threshold can be predefined in a protocol or pre-configured.

It should be noted that the third threshold and the fourth threshold may be the same or different. In some embodiments, when the fourth threshold and the third threshold are the same, B547 and B548 are the opposite of B545 and B546.

2. The target preamble signal includes: a second preamble signal.

In some embodiments, in this case, the specific implementation of obtaining the target synchronization information and/or the resource location information of the first signal according to the target preamble signal includes:
obtaining the second synchronization information and/or the resource location information of the first signal according to the second preamble signal.

In this case, the first specific implementation may be: the first terminal needs to obtain the second synchronization information based on the second preamble signal to achieve synchronization; the second specific implementation may be: the first terminal needs to obtain the second synchronization information based on the second preamble signal, and the terminal needs to obtain the resource location information of the first signal based on the second preamble signal; the third specific implementation may be: if the terminal synchronization accuracy is sufficient or the first signal delay is allowed, the terminal is synchronized and can directly obtain the resource location information of the first signal based on the second preamble signal.

In some embodiments, in one implementation, the specific implementation of obtaining the resource location information of the first signal according to the second preamble signal includes:
determining the resource location information of the first signal according to first reception information corresponding to the second preamble signal.

In some embodiments, the first reception information may be a reception position, a reception sequence, etc.; in some embodiments, the specific implementation of determining the resource location information of the first signal according to the first reception information corresponding to the second preamble signal includes at least one of the following:
C11. determining a reception start position in the resource location information of the first signal based on the reception position in the first reception information corresponding to the second preamble signal; or
C12. determining the resource location information of the first signal based on sequence information in the first reception information corresponding to the second preamble signal.

For example, when the second preamble signal corresponds to a sequence 1, the time domain and/or frequency domain duration of the first signal is M1 orthogonal frequency division multiplex (OFDM) symbols/N1 subcarriers (SCs), ... ; when the second preamble signal corresponds to a sequence N, the time domain and/or frequency domain duration of the first signal is Mn OFDM symbols/Nn SCs, and so on.

For example, when the second preamble signal corresponds to a sequence 1, the duration of the first signal is K1 bits, ... ; and when the second preamble signal corresponds to a sequence N, the duration of the first signal is Kn bits.

The sequence 1 to sequence N can be obtained through definitions in a protocol, radio resource control (RRC) configuration, control channel, and data channel.

It should be noted that, in order to accurately receive the first signal and the second preamble signal, in some embodiments, in one implementation, the method further includes:
obtaining configuration parameters of resource locations of the first signal and the second preamble signal in a first manner;
wherein the first manner includes at least one of the following:
   as defined in a protocol, according to an RRC configuration, as indicated by a control channel, or as indicated by a data channel.

In some embodiments, the configuration parameters of the resource locations of the first signal and the second preamble signal include at least one of the following:
C21, a time domain start position offset of the second preamble signal relative to the first signal;
C22, a frequency domain start position offset of the second preamble signal relative to the first signal;
C23, a relationship between the period of the second preamble signal and the period of the first signal;
C24, a time domain symbol pattern occupied by the second preamble signal in transmission resources;
C25, a time domain symbol pattern occupied by the first signal in transmission resources;
C26, a frequency domain subcarrier pattern occupied by the second preamble signal in transmission resources; or
C27. a frequency domain subcarrier pattern occupied by the first signal in transmission resources.

In some embodiments, the terminal may further determine, based on the second preamble signal, whether to receive the first signal. In one implementation, the method further includes:
in a case that the second preamble signal is successfully received at a resource location corresponding to the second preamble signal, determining to receive the first signal at a resource location of the first signal; otherwise, determining not to receive the first signal at the resource location of the first signal.

3. The target preamble signal includes: a first preamble signal.

In some embodiments, in this case, the specific implementation of obtaining the target synchronization information and/or the resource location information of the first signal according to the target preamble signal includes:
obtaining the first synchronization information according to the first preamble signal.

It can be understood that, in this case, the terminal needs to obtain the first synchronization information based on the first preamble signal to achieve terminal synchronization.

In some embodiments, in this case, in order to accurately receive the first signal, in one implementation, the method further includes:
obtaining a configuration parameter of a resource location of the first signal in a second manner;
wherein the second manner includes at least one of the following:
   as defined in a protocol, according to an RRC configuration, as indicated by a control channel, or as indicated by a data channel.

The configuration parameter of the resource location of the first signal is used to determine the resource location information of the first signal.

In some embodiments, the configuration parameter of the resource location of the first signal includes at least one of the following:
D11, reception period of the first signal;
D12, time domain position parameter of the first signal; for example, the time domain position parameter includes at least one of the following: a start position, an end position, a duration, or a time domain position pattern;
D13, frequency domain position parameter of the first signal; for example, the frequency domain position parameter includes at least one of the following: a start position, an end position, a duration, or a frequency domain position pattern;
D14, length of the first signal; for example, a length of the first signal is M bits;
D15, reception window parameter of the aperiodic first signal.

In some embodiments, the reception window parameter includes at least one of the following:
window period, duration, window start time, or reception window valid time.

In some embodiments, in this case, the above method may further include:
determining second reception information corresponding to the first signal according to the first preamble signal.

In some embodiments, the second reception information corresponding to the first signal includes at least one of the following:
D21, a length of the first signal;
D22, a code rate of the first signal;
D23, the first signal is received at a resource location of the first signal; this situation can be understood as receiving the first signal;
D24, the resource location of the first signal is skipped; this situation can be understood as not receiving the first signal.

In some embodiments, in one implementation, determining the second reception information corresponding to the first signal according to the first preamble signal includes at least one of the following D31 to D34.

D31. determining the second reception information corresponding to the first signal according to a signal format of the first preamble signal.

It should be noted that the signal format may be a predefined and/or preconfigured sequence of the first signal; for example, if the first preamble signal corresponds to a sequence 0, it indicates that there is transmission of the first signal; if the first preamble signal corresponds to a sequence 1, it indicates that there is no transmission of the first signal.

D32. determining second reception information corresponding to the first signal according to the resource location of the first preamble signal.

It should be noted that the resource location may include: a frequency domain position and/or a time domain position. For example, if the first preamble signal is received by the terminal at a predefined frequency domain position and/or time domain position, it indicates that there is transmission of the first signal; otherwise, there is no transmission of the first signal.

D33. determining second reception information corresponding to the first signal according to the resource location and signal format of the first preamble signal.

It should be noted that this situation is a combined application of the above-mentioned D31 and D32.

D34. determining second reception information corresponding to the first signal according to a reception rule for the first preamble signal.

It should be noted that the description of the reception rules can be found above and will not be repeated here.

In some embodiments, if the terminal does not determine the resource location information of the first signal through the configuration parameter of the resource location of the first signal, then in one implementation, the method further includes:
determining the resource location information of the first signal according to a resource location of the first preamble signal.

It should be noted that, in this case, the resource location information of the first signal is determined by the first preamble signal; the resource location of the first preamble signal may include: the time domain position and/or frequency domain position of the first preamble signal.

For example, the terminal determines the resource location information of the first signal based on the offset between the time domain position and/or frequency domain position of the first signal and the time domain position and/or frequency domain position of the first preamble signal.

For example, the terminal determines the resource location information of the first signal based on the relationship between the periods of the first signal and the first preamble signal.

It should be noted that, in all the three cases of target preamble signals with different contents, the terminal needs to receive the target preamble signal based on the configuration information. In one implementation, the method further includes:
receiving target configuration information of the target preamble signal;
wherein the target configuration information includes first configuration information and/or second configuration information;
the first configuration information is used for configuring the first preamble signal;
the second configuration information is used for configuring the second preamble signal.

In some embodiments, in one implementation, in a case that the target configuration information includes the first configuration information and the second configuration information, the first configuration information and the second configuration information satisfy at least one of the following:
E11. the first configuration information and the second configuration information are configured separately; or
E12. one of the first configuration information and the second configuration information is determined based on the other of the first configuration information and the second configuration information and an association configuration parameter.

In some embodiments, the association configuration parameter includes at least one of the following:
E121. a time domain offset of the first preamble signal relative to the second preamble signal;
E122, a frequency domain offset of the first preamble signal relative to the second preamble signal;
E123, a relationship between the reception periods of the first preamble signal and the second preamble signal; for example, the reception period of the second preamble signal=N1 *the reception period of the first preamble signal.

In some embodiments, the target configuration information includes at least one of the following:
E21, a reception period;
E22, a time domain duration; for example, the time domain duration is the number of OFDM symbols in the time domain;
E23, a frequency domain duration; for example, the frequency domain duration is the number of SCs in the time domain;
E24, a time domain start position;
E25, a frequency domain start position;
E26, a time domain end position;
E27, a frequency domain end position; or
E28, a reception window parameter for an aperiodic signal.

It should be noted that the description of the reception window parameter can be found above and will not be repeated here.

It should be noted that when only the first preamble signal or the second preamble signal is configured, the terminal needs to obtain at least one of E21-E28 to perform signal reception accurately. When both the first and second preamble signals are configured, the terminal may obtain at least one of E21-E28 based on one of the preamble signals and obtain at least one of E121-E123 based on the other of the preamble signals to perform signal reception accurately. Alternatively, the terminal may obtain at least one of E21-E28 based on each preamble signal, to perform signal reception accurately.

In some embodiments, the target configuration information is configured based on at least one of the following:
E31, configured per terminal; that is, different terminals correspond to different respective target configuration information;
E32, configured per terminal group; that is, different terminal groups correspond to different respective target configuration information;
E33, configured per cell; that is, different cells correspond to different respective target configuration information.

In some embodiments, the target configuration information is obtained in at least one of the following manners:
as defined in a protocol, as configured by RRC signaling, as configured by a control channel, or as configured by a data channel.

It should be noted that, in order to smoothly send the target configuration information, in some embodiments, in one implementation, the method further includes:
sending a parameter related to a receiving capability of a low power wake up receiver and/or a measurement parameter to a network device.

In some embodiments, the parameter related to the receiving capability of the low power wake up receiver includes at least one of the following:
E31, receiver type; for example, the receiver type includes at least one of the following: RF-based, baseband-based, or OFDM-based;
E32, receiver sensitivity;
E33, received signal type; for example, the received signal type includes at least one of the following: On-Off Keying (OOK), Frequency- Shift Keying (FSK), or OFDM;
E34, receiver bandwidth; or
E35, signal receiving frequency.

In some embodiments, the measurement parameter includes at least one of the following:
E41, Reference Signal Received Power (RSRP) of the target preamble signal and/or the second signal; or
E42, Reference Signal Received Quality (RSRQ) of the target preamble signal and/or the second signal.

In some embodiments, the second signal includes at least one of the following:
Synchronization Signal/PBCH Block (SSB); or
channel state information reference signal (CSI- RS).

In some embodiments, the network device may send the first preamble signal to the terminal periodically or aperiodically, that is, the sending of the first preamble signal is on-demand; and when both the first preamble signal and the second preamble signal are sent, the network device may send the first preamble signal and the second preamble signal separately to the terminal.

In some embodiments, an implementation of sending the first preamble signal aperiodically to a terminal includes:
periodically sending the first preamble signal in a first window that is defined in a protocol or preconfigured;
wherein a start position of the first window is determined by a service arrival time, and an end time of the first window is determined by the maximum number of times the first preamble signal is sent and/or the time when an uplink signal sent by the terminal is received.

In some embodiments, the network device may send the first signal periodically or aperiodically, that is, the first signal is sent on-demand.

It should be noted that the network device may send the second preamble signal aperiodically in the following manner:
the network device periodically sends a second preamble signal within a second window defined in a protocol or preconfigured; the start position of the second window is determined by a service arrival time, and the end time of the second window can be determined by the maximum number of times the second preamble signal is sent and/or the time when the uplink signal sent by the terminal is received.

It should be noted that the network device may send the first signal aperiodically in the following manner:
periodically sending the first signal in a third window that is defined in a protocol or preconfigured;
wherein a start position of the third window is determined by a service arrival time, and an end time of the third window is determined by the maximum number of times the first signal is sent and/or the time when an uplink signal sent by the terminal is received.

The following takes the case where the first signal is a wake up signal (WUS) and the base station communicates with the terminal as an example to illustrate the specific application of the embodiment of the present disclosure.

Application scenario 1: LP-WUR continuously or aperiodically receives the first preamble signal, and receives the second preamble signal and wake up signal on-demand.

Step 1: The base station continuously sends LP-SS (corresponding to the first preamble signal in this disclosure) at a first period. When service transmission with the low power terminal is required, the base station sends LP-WUS to wake up the MR of the terminal for data transmission.

1. The base station configures the periodic LP-SS transmission resource location for LP-SS transmission;
The LP-SS transmission resource location configuration information may include: frequency domain duration (e.g., K segments of SCs), time domain duration (e.g., N OFDM symbols), time domain/frequency domain start position, and time domain/frequency domain end position;
2. The LP-WUS consists of two parts: a fixed-length preamble signal (corresponding to the second preamble signal in this disclosure) and a WUS that carries wake up information. The preamble sequence is used to determine the start position for receiving the WUS sequence and/or other reception information of WUS.

For example, the generated sequence of the preamble is 1, 2, 3...n, the length/ code rate of the corresponding WUS sequence is M1, M2... Mn respectively;
The Preamble signal and WUS can be sent jointly or separately.

3. LP-SS and Preamble signals can be: UE-specific, UE-group specific, or cell-specific.

Step 2: The LP-WUR device receives the LP-SS at a first period or aperiodically to obtain synchronization information, and determines whether to receive the LP-WUS and/or the resource location information of the LP-WUS according to the LP-SS;
1. when the LP-WUR receives the signal aperiodically, the reception window parameter needs to be defined, and the reception window parameter mainly includes: window period, duration, window start time, and reception window valid time (receive signals within the duration of the reception window, and do not receive signals outside the time window); the reception window parameter can be configured through downlink signals (Physical Downlink Control Channel (PDCCH), Physical Downlink Shared Channel (PDSCH), Physical Broadcast Channel (PBCH), definition in a protocol and/or RRC signaling;
2. The determination as to whether there is transmission of LP-WUS based on the reception information of LP-SS may be performed in any of the following methods:
   Method 1: Determine whether to receive LP-WUS based on the frequency/time domain receiving position of LP-SS.

For example, if the first device receives the LP-SS at position 1, it indicates that there is transmission of a preamble signal and/or WUS after the LP-SS, and the first device starts to receive the preamble signal and/or WUS.

Method 2: If the number of times the LP-SS is received within a time window meets a threshold requirement, it is determined that there is transmission of a preamble signal and/or WUS. The time window and threshold can be predefined in a protocol or preconfigured.

Meeting the threshold requirement can be: the number of times the LP-SS is received within the window exceeding or falling below the threshold indicates that there is transmission of a preamble signal and/or WUS after the LP-SS.

Method 3: Predefined and/or preconfigured sequence of LP-SS. For example, sequence 0 indicates that there is transmission of a preamble signal and WUS after the LP-SS, and sequence 1 indicates that no preamble signal and/or WUS is sent after the LP-SS.

3. Determining the transmission resource location of the preamble signal and/or WUS based on the reception information of the LP-SS can be performed by using any of the following methods:
Method 1: Determine the receiving resource location of the Preamble signal and/or WUS based on the receiving resource location of the LP-SS;
The resource location association parameters of the Preamble and LP-SS are configured and defined through downlink signals (PDCCH, PDSCH, PBCH), predefinitions and/or RRC signaling. The parameters may include: time/frequency domain offset, number of LP-SS transmission periods associated with the preamble signal.

4. The terminal determines to receive the preamble signal and/or WUS at the second period or to receive the LP-WUS at the LP-WUS resource location associated with the LP-SS based on the reception information of the LP-SS; the LP-WUR receives the wake up signal, and obtaining the wake up information can be performed in the following manner:
Manner 1: The network has not configured the resource location of the LP-WUS. When the LP-WUR receives the LP-SS carrying the wake up signal, the LP-WUR detects the preamble signal based on the second period, determines the reception start position and reception information (defined in step 1) of the WUS signal based on the received preamble signal, and obtains the wake up information.

In particular, if the LP-WUS configured by the base station does not include a preamble signal, the LP-WUR directly receives the WUS at the second period;
Manner 2: The network configures the resource location of the LP-WUS. When the LP-WUR receives the LP-SS signal carrying the wake up signal, the LP-WUR receives the Preamble signal at the resource location of LP-WUS, determines the WUS's reception start position and/or other reception information (defined in step 1) and obtains the wake up information.

Step 3: The base station may continue to send LP-WUS for a period of time after the service arrives until the base station receives the uplink signal transmitted by the MR after the MR is successfully awakened. Alternatively, the base station may continue to send LP-WUS within a time window after the service arrives and stop sending LP-WUS outside the time window.

It should be noted that the start position of the time window is determined based on the service arrival time; the end position of the time window can be determined by the maximum number of LP-WUS transmissions or the time window duration. The relevant parameters can be obtained through broadcast signals (System Information Block (SIB), PBCH), definition in a protocol, as configured by RRC signaling, and/or downlink signals and/or downlink channels (PDCCH, PDSCH).

Application scenario 2: LP-WUR continuously receives the first and second preamble signals and receives the wake up signal on-demand.

Step 1: The base station continuously sends LP-SS (corresponding to the first preamble signal in the present disclosure) at a first period and/or continuously sends preamble signals (corresponding to the second preamble signal in the present disclosure) at a second period. When service transmission with the low power terminal is required, the base station sends WUS to wake up the MR of the terminal for data transmission.

1. The base station configures the periodic LP-SS transmission resource locations for LP-SS transmission;
The LP-SS transmission resource location configuration information may include: frequency domain duration (e.g., K segments of SCs), time domain duration (e.g., N OFDM symbols), time domain/frequency domain start position, and time domain/frequency domain end position;
2. LP-WUS consists of two parts: a fixed-length preamble signal and a WUS that carries wake up information. The preamble sequence is used to determine the start position for receiving the WUS sequence and/or other WUS reception information.

For example, when the generated sequence of the preamble is 1, 2, 3...n, the length/code rate of the corresponding WUS sequence is M1, M2... Mn respectively;
The Preamble signal and WUS can be sent jointly or separately.

3. When the base station sends LP-SS and Preamble signals at the first and second periods respectively, the terminal can obtain coarse synchronization information based on LP-SS and obtain precise synchronization information based on the Preamble signal.

The coarse synchronization information and the precise synchronization information are used to receive the WUS.

For example, coarse synchronization information may indicate that parameter such as the WUS 's reception time domain deviation, frequency domain deviation, false alarm probability, or missed detection probability is relatively high. The parameter being high refers to that the WUS's reception time domain deviation meets an eleventh threshold, the frequency domain deviation meets a twelfth threshold, the false alarm probability meets a thirteenth threshold, and the missed detection probability meets a fourteenth threshold. Fine synchronization information may indicate that parameter such as the WUS 's reception time domain deviation, frequency domain deviation, false alarm probability, or missed detection probability is relatively low. The parameter being low refers to that the WUS's reception time domain deviation meeting a fifteenth threshold, the frequency domain deviation meeting a sixteenth threshold, the false alarm probability meeting a seventeenth threshold, and the missed detection probability meeting an eighteenth threshold.

4. LP-SS and Preamble signals can be: UE-specific, UE-group specific, or cell-specific.

Step 2: The terminal determines the resource location of the LP-SS at the first period, obtains synchronization information, and determines the resource location of the preamble at the second period to determine reception of the WUS.

Based on the received preamble signal, the terminal determines the WUS reception start position and reception information (see Application scenario 1 for details) and obtains the wake up information.

Step 3: The base station may continue to send LP-WUS signals for a period of time after the service arrives until receiving the uplink signal transmitted by the MR after the MR is successfully awakened. Alternatively, the base station may continue to send LP-WUS within a time window after the service arrives and stop sending LP-WUS outside the time window.

It should be noted that the start position of the time window is determined based on the service arrival time; the end position of the time window can be determined by the maximum number of LP-WUS transmissions or the time window duration. These two parameters can be obtained through broadcast signals (SIB, PBCH), definition in a protocol, as configured by RRC signaling, downlink signals, and/or downlink channels (PDCCH, PDSCH).

Application scenario 3: LP-WUR continuously or aperiodically receives the second preamble signal and receives the wake up signal on-demand.

Step 1: When the base station needs to transmit services to the low power terminal, the base station will send LP-WUS to wake up the MR of the terminal for data transmission;
1. The LP-WUS consists of two parts: a preamble signal (corresponding to the second preamble signal in this disclosure) and a WUS carrying wake up information. The preamble sequence is used to determine the start position for receiving the WUS sequence and/or other WUS reception information.

For example, the generated sequence of the preamble is 1, 2, 3...n, the length/code rate of the corresponding WUS sequence is M1, M2... Mn respectively;

The Preamble signal and WUS can be sent jointly or separately.

2. The preamble signal can be: UE-specific, UE-group specific, or cell-specific.

Step 2: The terminal determines the resource location of the preamble at the second period and determines the reception of the WUS;
The terminal determines the start position for receiving WUS and reception information (see Application scenario 1 for details) based on the received preamble signal and obtains the wake up information.

Step 3: The base station may continue to send LP-WUS signals for a period of time after the service arrives until receiving the uplink signal transmitted by the MR after the MR is successfully awakened. Alternatively, the base station may continue to send LP-WUS within a time window after the service arrives and stop sending LP-WUS outside the time window.

It should be noted that the start position of the time window is determined based on the service arrival time; the end position of the time window can be determined by the maximum number of LP-WUS transmissions or the time window duration. These two parameters can be obtained through broadcast signals (SIB, PBCH), definition in a protocol, as configured by RRC signaling, downlink signals, and/or downlink channels (PDCCH, PDSCH).

Application Scenario 4: LP-WUR continuously receives the first preamble signal for receiving the wake up signal

Step 1: The base station continuously sends LP-SS at the first period. When the base station needs to transmit services to the low power terminal, the base station sends WUS to wake up the MR of the terminal for data transmission.

1. The base station configures periodic LP-SS (corresponding to the first preamble signal in the present disclosure) transmission resource locations for transmitting the LP-SS;
The LP-SS transmission resource location configuration information may include: frequency domain duration (e.g., K segments of SCs), time domain duration (e.g., N OFDM symbols), time domain/frequency domain start position, and time domain/frequency domain end position;
2. The base station can configure a WUS resource location or not configure the WUS resource location;
When the base station configures the WUS resource location, the terminal determines the reception of WUS based on the configuration.

When the base station does not configure the WUS resource location, the terminal can determine the WUS reception location through periodic blind detection or at the LP-SS reception location; LP-WUS blind detection period, and the relationship between the WUS resource location and the LP-SS resource location can be obtained through definition in a protocol, as configured by RRC signaling, downlink signals and/or downlink channels (PDCCH, PDSCH);
3. LP-SS can be: UE-specific, UE-group specific, or cell-specific.
Step 2: LP-WUR periodically receives LP-SS to obtain synchronization information and/or WUS reception information for WUS reception;
1. Determining that there is WUS transmission based on LP-SS reception information may be performed by using any of the following methods:
   Method 1: Determine the reception of WUS based on the frequency domain/time domain position for receiving the LP-SS. For example, if the first device receives the LP-SS at position 1, it indicates the transmission of WUS, and the first device starts receiving WUS.
   Method 2: If the number of times the LP-SS is received within a time window meets a threshold requirement, it is determined that there is WUS transmission. The time window and the threshold can be predefined in a protocol or preconfigured.
   Meeting the threshold requirement can be: if the number of times the LP-SS is received within the window exceeds or falls below the threshold, it indicates that WUS is sent after LP-SS, and reception of WUS starts;
   Method 3: Predefined and/or preconfigured sequence of LP-SS. For example, sequence 0 indicates that WUS is sent after LP-SS, and sequence 1 indicates that WUS is not sent after LP-SS.

2. Determining the resource location of the WUS transmission based on the LP-SS reception information can be performed by one of the following methods:
Method 1: Determine the resource location for receiving WUS based on the resource location for receiving the LP-SS;
The resource location association parameters of WUS and LP-SS are defined through broadcast signals (SIB, PBCH), definition in a protocol and/or as configured by RRC signaling. The parameters may include: time/frequency domain offset, the number of LP-SS transmission periods associated with WUS;
3. The terminal determines, based on the LP-SS reception information, to receive WUS or receive WUS at the WUS resource location associated with the LP-SS; the LP-WUR receiving WUS to obtain the wake up information can be performed in the following manners:
   Manner 1: when the network does not configure the WUS resource location, and the LP-WUR receives the LP-SS carrying the WUS, the LP-WUR periodically detects the WUS and obtains the wake up information.
   Manner 2: when the network configures the resource location of WUS and the LP-WUR receives the LP-SS message carrying the WUS, the LP-WUR receives the WUS at the resource location of WUS and obtains the wake up information.

Step 3: The base station may continue to send WUS for a period of time after the service arrives until the base station receives the uplink signal transmitted by the MR after the MR is successfully awakened, or the base station may continue to send WUS within a time window after the service arrives and stop sending WUS outside the time window;
It should be noted that the start position of the time window is determined based on the service arrival time; the end position of the time window can be determined by the maximum number of LP-WUS transmissions or the time window duration. These two parameters can be obtained through broadcast signals (SIB, PBCH), definition in a protocol, as configured by RRC signaling, downlink signals, and/or downlink channels (PDCCH, PDSCH).

Application Scenario 5: The base station determines the configuration information of low power reception information based on the parameters reported by the terminal

Step 1: The terminal reports a parameter related to the LP-WUR receiving capability and/or a measurement parameter, and obtains the first configuration information and/or second configuration information for low power signal reception sent by the base station, which is used for receiving the first preamble signal and/or the second preamble signal and/or the first signal.

In some embodiments, the parameters related to the LP-WUR receiving capability reported by the terminal may include at least one of the following:
receiver type;
receiver sensitivity;
received signal type;
receiver bandwidth; or
signal receiving frequency.

In some embodiments, the measurement parameter reported by the terminal may include at least one of the following:
RSRP of the first preamble signal, the second preamble signal and/or the NR signal (SSB, CSI-RS); or
RSRQ of the first preamble signal, the second preamble signal and/or the NR signal (SSB, CSI-RS).

In some embodiments, the terminal obtains the first configuration information and/or the second configuration information through RRC signaling, a downlink signal and/or a downlink channel.

The first configuration information is used for receiving the first preamble signal. For detailed definitions, see Application scenarios 1 to 4.

The second configuration information is used for receiving the second preamble signal and/or the first signal. For detailed definitions, see Application scenarios 1 to 4.

Step 2: The base station separately configures, based on the parameter related to the receiving capability and/or measurement parameter reported by the terminal, the first configuration information and/or the second configuration information for different LP-WURs, for sending the first preamble signal and/or the second preamble signal and/or the first signal.

Specifically, the first configuration information and/or the second configuration information may be one of the following: UE-specific, UE-group specific, cell-specific.

Step 3: The terminal enters an extremely low power consumption state, and receives a first preamble signal and/or a second preamble signal based on the first configuration information and/or the second configuration information to determine reception of the first signal.

In some embodiments, for details of the specific method by which the terminal receives the first preamble signal and/or the second preamble signal, refer to application scenarios 1 to 4.

In some embodiments, for details of the method by which the terminal determines the reception of the first signal, refer to application scenarios 1 to 4.

Step 4: The base station sends the first preamble signal, the second preamble signal and/or the first signal.

For the specific method by which the base station performs the sending, please refer to Application scenarios 1 to 4.

It should be noted that at least one embodiment of the present disclosure can achieve the following beneficial effects:
1. For baseband-based LP-WURs, receiving the periodic first preamble signal allows the LP-WUR to maintain coarse synchronization before receiving the wake up signal, and when receiving the wake up signal, obtain, through the second preamble signal, more accurate synchronization information and receiving position information of the wake up signal, thereby improving the probability of correct wake up signal reception.
2. For RF-based LP-WURs, the on-demand second preamble signal is received to determine the reception position and reception information of the wake up signal, reducing the false alarm probability of the wake up signal while reducing the resource overhead of the low power signal.

The technical solutions provided by the embodiments of the present disclosure can be applied to a variety of systems, particularly 5G systems. For example, applicable systems may include the Global System of Mobile Communication (GSM) system, the Code Division Multiple Access (CDMA) system, the Wideband Code Division Multiple Access (WCDMA), General Packet Radio Service (GPRS) system, the Long Term Evolution (LTE) system, the LTE Frequency Division Duplex (FDD) system, the LTE Time Division Duplex (TDD) system, the Long Term Evolution Advanced (LTE-A) system, the Universal Mobile Telecommunications System (UMTS), the Worldwide Interoperability for Microwave Access (WiMAX) system, and the 5G New Radio (NR) system. These various systems all include terminals (also referred to as terminal device) and network device. The systems may also include core network components, such as the Evolved Packet System (EPS) and the 5G System (5GS).

The terminals involved in the embodiments of the present disclosure, also referred to as terminal devices, can be devices that provide voice and/or data connectivity to users, handheld devices with wireless connectivity, or other processing devices connected to a wireless modem. The names of terminal devices may vary in different systems. For example, in 5G systems, terminal devices may be referred to as user equipment (UE). Wireless terminal devices can communicate with one or more core networks (CNs) via a radio access network (RAN). Wireless terminal devices can be mobile terminal devices, such as mobile phones (also known as "cellular" phones) and computers with mobile terminal devices. For example, they can be portable, pocket-sized, handheld, built-in, or in-vehicle mobile devices that exchange voice and/or data with a radio access network. Examples include Personal Communication Service (PCS) phones, cordless phones, Session Initiated Protocol (SIP) phones, Wireless Local Loop (WLL) stations, and Personal Digital Assistants (PDAs). The wireless terminal device may also be referred to as a system, a subscriber unit, a subscriber station, a mobile station, a mobile station, a remote station, an access point, a remote terminal, an access terminal, a user terminal, a user agent, or a user device, but is not limited in the embodiments of the present disclosure.

The network device involved in the embodiments of the present disclosure may be a base station, which may include multiple cells providing services to terminals. Depending on the specific application scenario, a base station may also be referred to as an access point, or may be a device in an access network that communicates with a wireless terminal device via one or more sectors over the air interface, or may be referred to by other names. The network device may be used to interchange received air frames with Internet Protocol (IP) packets, acting as a router between the wireless terminal device and the rest of the access network, which may include an Internet Protocol (IP) communication network. The network device may also coordinate attribute management of the air interface. For example, the network devices involved in the embodiments of the present disclosure may be base transceiver stations (BTSs) in the Global System for Mobile communications (GSM) or Code Division Multiple Access (CDMA), NodeBs in Wide-band Code Division Multiple Access (WCDMA), evolutionary NodeBs (eNBs or e-NodeBs) in the Long Term Evolution (LTE) system, 5G base stations (gNBs) in the next generation 5G network architecture, home evolved NodeBs (HeNBs), relay nodes, femtos, pico base stations, etc., and are not limited in the embodiments of the present disclosure. In some network structures, the network devices may include centralized unit (CU) nodes and distributed unit (DU) nodes, and the centralized unit and the distributed unit may also be geographically separated.

Network devices and terminal devices can each use one or more antennas for Multiple Input Multiple Output (MIMO) transmission. MIMO transmission can be either Single User MIMO (SU-MIMO) or Multiple User MIMO (MU-MIMO). Depending on the configuration and number of antennas, MIMO transmission can be two-dimensional MIMO (2D-MIMO), three-dimensional MIMO (3D-MIMO), full-dimensional MIMO (FD-MIMO), or massive MIMO. It can also employ diversity transmission, precoding, or beamforming.

As shown in Fig. 3, an embodiment of the present disclosure provides an information transmission method, which is performed by a network device and includes:
Step S301, sending a target preamble signal to a terminal;
wherein the target preamble signal is used by the terminal to receive a first signal.

In some embodiments, the target preamble signal includes at least one of the following: a reference signal, a synchronization signal, a dedicated signal for a low power wake up receiver, downlink data, or a control signal; and/or
the first signal includes at least one of the following: a reference signal, a synchronization signal, a dedicated signal for a low power wake up receiver, downlink data, or a control signal.

In some embodiments, the target preamble signal includes: a first preamble signal and/or a second preamble signal;
the target synchronization information includes: first synchronization information and/or second synchronization information; wherein, the first synchronization information is determined according to the first preamble signal, and the second synchronization information is determined according to the second preamble signal; the first synchronization information and the second synchronization information indicate different respective synchronization accuracies.

In some embodiments, the method further includes:
sending configuration parameters of resource locations of the first signal and the second preamble signal to the terminal through a first signaling;
wherein the first signaling includes at least one of the following:
   radio resource control (RRC) signaling, a control channel, or a data channel.

In some embodiments, the configuration parameters of the resource locations of the first signal and the second preamble signal include at least one of the following:
a time domain start position offset of the second preamble signal relative to the first signal;
a frequency domain start position offset of the second preamble signal relative to the first signal;
a relationship between periods of the second preamble signal and the first signal;
a time domain symbol pattern occupied by the second preamble signal and/or the first signal in transmission resources; or
a frequency domain subcarrier pattern occupied by the second preamble signal and/or the first signal in transmission resources.

In some embodiments, the method further includes:
sending a configuration parameter of a resource location of the first signal to the terminal through a target object;
wherein the target object includes at least one of the following:
   radio resource control (RRC) signaling, a control channel, or a data channel.

In some embodiments, the configuration parameter of the resource location of the first signal includes at least one of the following:
a reception period of the first signal;
a time domain position parameter of the first signal;
a frequency domain position parameter of the first signal;
a length of the first signal; or
a reception window parameter for an aperiodic first signal.

In some embodiments, the reception window parameter includes at least one of the following:
window period, duration, window start time, or reception window valid time.

In some embodiments, the reception window valid time is used for indicating one or more of a time length for receiving the first preamble signal in a reception window, a time length for receiving the second preamble signal in a reception window, and a time length for receiving the first signal in a reception window.

In some embodiments, the method further includes:
sending target configuration information of a target preamble signal to the terminal;
wherein the target configuration information includes first configuration information and/or second configuration information;
the first configuration information is used for configuring the first preamble signal;
the second configuration information is used for configuring the second preamble signal.

In some embodiments, in a case that the target configuration information includes the first configuration information and the second configuration information, the first configuration information and the second configuration information satisfy at least one of the following:
the first configuration information and the second configuration information are configured separately; or
one of the first configuration information and the second configuration information is determined based on the other of the first configuration information and the second configuration information and an association configuration parameter.

In some embodiments, the association configuration parameter includes at least one of the following:
a time domain offset of the first preamble signal relative to the second preamble signal;
a frequency domain offset of the first preamble signal relative to the second preamble signal; or
a relationship between reception periods of the first preamble signal and the second preamble signal.

In some embodiments, the target configuration information includes at least one of the following:
reception period;
time domain duration;
frequency domain duration;
time domain start position;
frequency domain start position;
time domain end position;
frequency domain end position; or
a reception window parameter for an aperiodic signal.

In some embodiments, the target configuration information is configured based on at least one of the following:
configured per terminal;
configured per terminal group; or
configured per cell.

In some embodiments, the synchronization accuracy of the first synchronization information includes at least one of the following:
a reception time domain deviation of the target preamble signal and/or the first signal meets an eleventh threshold;
a reception frequency domain deviation of the target preamble signal and/or the first signal meets a twelfth threshold;
a false alarm probability of the target preamble signal and/or the first signal meets a thirteenth threshold; or
a missed detection probability of the target preamble signal and/or the first signal meets a fourteenth threshold;
   and/or
the synchronization accuracy of the second synchronization information includes at least one of the following:
   the reception time domain deviation of the target preamble signal and/or the first signal meets a fifteenth threshold;
   the reception frequency domain deviation of the target preamble signal and/or the first signal meets a sixteenth threshold;
   the false alarm probability of the target preamble signal and/or the first signal meets a seventeenth threshold; or
   the missed detection probability of the target preamble signal and/or the first signal meets an eighteenth threshold;
   wherein, the eleventh threshold is greater than the fifteenth threshold, the twelfth threshold is greater than the sixteenth threshold, the thirteenth threshold is greater than the seventeenth threshold, and the fourteenth threshold is greater than the eighteenth threshold.

In some embodiments, the method further includes:
receiving a parameter related to a receiving capability of a low power wake up receiver and/or a measurement parameter from the terminal.

In some embodiments, the parameter related to the receiving capability of the low power wake up receiver includes at least one of the following:
receiver type;
receiver sensitivity;
received signal type;
receiver bandwidth; or
signal receiving frequency.

In some embodiments, the measurement parameter includes at least one of the following:
a reference signal received power of the target preamble signal and/or a second signal; or
a reference signal received quality of the target preamble signal and/or the second signal.

In some embodiments, the second signal includes at least one of the following:
synchronization signal/PBCH block; or
channel state information reference signal.

In some embodiments, in a case that the target preamble signal includes the first preamble signal, sending the target preamble signal to the terminal includes:
sending the first preamble signal to the terminal periodically or aperiodically.

In some embodiments, sending the first preamble signal to the terminal aperiodically includes:
periodically sending the first preamble signal in a first window that is defined in a protocol or preconfigured;
wherein a start position of the first window is determined by a service arrival time, and an end time of the first window is determined by the maximum number of times the first preamble signal is sent and/or the time when an uplink signal sent by the terminal is received.

In some embodiments, in a case that the target preamble signal includes the second preamble signal, sending the target preamble signal to the terminal includes:
sending the second preamble signal to the terminal periodically or aperiodically.

In some embodiments, sending the second preamble signal to the terminal aperiodically includes:
periodically sending the second preamble signal in a second window that is defined in a protocol or preconfigured;
wherein a start position of the second window is determined by a service arrival time, and an end time of the second window is determined by the maximum number of times the second preamble signal is sent and/or the time when an uplink signal sent by the terminal is received.

In some embodiments, in a case that the target preamble signal includes the first preamble signal and the second preamble signal, sending the target preamble signal to the terminal includes:
sending the first preamble signal and the second preamble signal separately to the terminal.

In some embodiments, the method further includes:
sending the first signal to the terminal periodically or aperiodically.

In some embodiments, sending the first signal to the terminal aperiodically includes:
periodically sending the first signal in a third window that is defined in a protocol or preconfigured;
wherein a start position of the third window is determined by a service arrival time, and an end time of the third window is determined by the maximum number of times the first signal is sent and/or the time when an uplink signal sent by the terminal is received.

In some embodiments, the first signal includes a wake up signal.

It should be noted that all implementations in the above embodiments are applicable to the embodiments of the information transmission method applied to the terminal side, and can achieve the same technical effects, so they will not be repeated here.

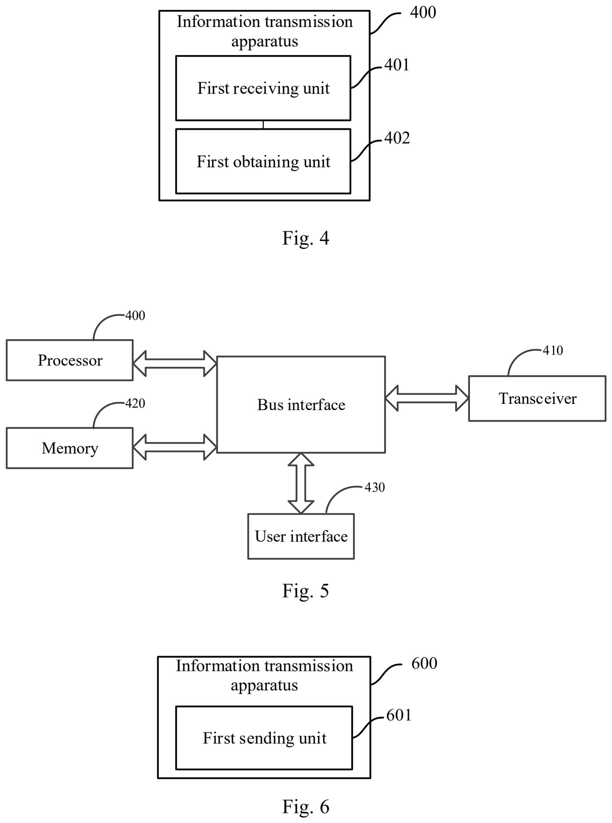

As shown in Fig. 4, an embodiment of the present disclosure provides an information transmission apparatus 400, which is applied to a terminal and includes:
a first receiving unit 401, configured to receive a target preamble signal, wherein the target preamble signal is used by the terminal to receive a first signal;
a first obtaining unit 402, configured to obtain target synchronization information and/or resource location information of the first signal according to the target preamble signal.

In some embodiments, the target preamble signal includes at least one of the following: a reference signal, a synchronization signal, a dedicated signal for a low power wake up receiver, downlink data, or a control signal; and/or
the first signal includes at least one of the following: a reference signal, a synchronization signal, a dedicated signal for a low power wake up receiver, downlink data, or a control signal.

In some embodiments, the target preamble signal includes: a first preamble signal and/or a second preamble signal;
the target synchronization information includes: first synchronization information and/or second synchronization information; wherein, the first synchronization information is determined according to the first preamble signal, and the second synchronization information is determined according to the second preamble signal; the first synchronization information and the second synchronization information indicate different respective synchronization accuracies.

In some embodiments, in a case that the target preamble signal includes the first preamble signal and the second preamble signal, the first obtaining unit is configured to:
obtain first synchronization information according to the first preamble signal;
obtain the second synchronization information and/or the resource location information of the first signal according to the second preamble signal.

In some embodiments, in a case that the target preamble signal includes the second preamble signal, the first obtaining unit is configured to:
obtain the second synchronization information and/or the resource location information of the first signal according to the second preamble signal.

In some embodiments, an implementation of obtaining resource location information of the first signal according to the second preamble signal includes:
determining the resource location information of the first signal according to first reception information corresponding to the second preamble signal.

In some embodiments, the specific implementation of determining the resource location information of the first signal based on the first reception information corresponding to the second preamble signal includes at least one of the following:
determining a reception start position in the resource location information of the first signal based on a reception position in the first reception information corresponding to the second preamble signal; or
determining the resource location information of the first signal based on sequence information in the first reception information corresponding to the second preamble signal.

In some embodiments, the apparatus further includes:
a second obtaining unit, configured to obtain configuration parameters of resource locations of the first signal and the second preamble signal in a first manner;
wherein the first manner includes at least one of the following:
   as defined in a protocol, according to a radio resource control (RRC) configuration, as indicated by a control channel, or as indicated by a data channel.

In some embodiments, the configuration parameters of the resource locations of the first signal and the second preamble signal include at least one of the following:
a time domain start position offset of the second preamble signal relative to the first signal;
a frequency domain start position offset of the second preamble signal relative to the first signal;
a relationship between periods of the second preamble signal and the first signal;
a time domain symbol pattern occupied by the second preamble signal in transmission resources;
a time domain symbol pattern occupied by the first signal in transmission resources;
a frequency domain subcarrier pattern occupied by the second preamble signal in transmission resources; or
a frequency domain subcarrier pattern occupied by the first signal in transmission resources.

In some embodiments, the apparatus further includes:
a first determining unit, configured to determine to receive the first signal at the resource location of the first signal in a case that the second preamble signal is successfully received at the resource position corresponding to the second preamble signal.

In some embodiments, in a case that the target preamble signal includes the first preamble signal, the first obtaining unit is configured to:
obtain the first synchronization information according to the first preamble signal.

In some embodiments, the apparatus further includes:
a third obtaining unit, configured to obtain a configuration parameter of the resource location of the first signal in a second manner;
wherein the second manner includes at least one of the following:
   as defined in a protocol, according to an RRC configuration, as indicated by a control channel, or as indicated by a data channel.

In some embodiments, the apparatus further includes:
a second receiving unit, configured to receive target configuration information of the target preamble signal;
wherein the target configuration information includes first configuration information and/or second configuration information;
the first configuration information is used for configuring the first preamble signal;
the second configuration information is used for configuring the second preamble signal.

In some embodiments, in a case that the target configuration information includes the first configuration information and the second configuration information, the first configuration information and the second configuration information satisfy at least one of the following:
the first configuration information and the second configuration information are configured separately; or
one of the first configuration information and the second configuration information is determined based on the other of the first configuration information and the second configuration information and an association configuration parameter.

In some embodiments, the association configuration parameter includes at least one of the following:
a time domain offset of the first preamble signal relative to the second preamble signal;
a frequency domain offset of the first preamble signal relative to the second preamble signal; or
a relationship between reception periods of the first preamble signal and the second preamble signal.

In some embodiments, the target configuration information includes at least one of the following:
reception period;
time domain duration;
frequency domain duration;
time domain start position;
frequency domain start position;
time domain end position;
frequency domain end position; or
a reception window parameter for an aperiodic signal.

In some embodiments, the target configuration information is configured based on at least one of the following:
configured per terminal;
configured per terminal group; or
configured per cell.

In some embodiments, the target configuration information is obtained in at least one of the following manners:
as defined in a protocol, as configured by RRC signaling, as configured by a control channel, or as configured by a data channel.

In some embodiments, in a case that the target preamble signal includes the first preamble signal and the second preamble signal, the apparatus further includes at least one of the following:
a second determining unit, configured to determine resource location information of the second preamble signal based on the first preamble signal;
a third determining unit, configured to determine second reception information corresponding to the first signal according to the first preamble signal.

In some embodiments, when the target preamble signal includes the first preamble signal, the apparatus further includes:
a fourth determining unit, configured to determine second reception information corresponding to the first signal based on the first preamble signal.

In some embodiments, the second reception information corresponding to the first signal includes at least one of the following:
a length of the first signal;
a code rate of the first signal;
the first signal is received at a resource location of the first signal; or
the resource location of the first signal is skipped.

In some embodiments, the apparatus further includes at least one of the following:
a fifth determining unit, configured to obtain a configuration parameter of the resource location of the first signal in a third manner, and determine the resource location information of the first signal according to the configuration parameter of the resource location;
a sixth determining unit, configured to determine resource location information of the first signal according to the resource location of the first preamble signal;
wherein the third manner includes at least one of the following:
   as defined in a protocol, according to an RRC configuration, as indicated by a control channel, or as indicated by a data channel.

In some embodiments, the configuration parameter of the resource location of the first signal includes at least one of the following:
a reception period of the first signal;
a time domain position parameter of the first signal;
a frequency domain position parameter of the first signal;
a length of the first signal; or
a reception window parameter for an aperiodic first signal.

In some embodiments, the reception window parameter includes at least one of the following:
window period, duration, window start time, or reception window valid time.

In some embodiments, the reception window valid time is used for indicating one or more of a time length for receiving the first preamble signal in a reception window, a time length for receiving the second preamble signal in a reception window, and a time length for receiving the first signal in a reception window.

In some embodiments, the fourth determining unit is configured to implement at least one of the following:
determining the second reception information corresponding to the first signal according to a signal format of the first preamble signal;
determining the second reception information corresponding to the first signal according to a resource location of the first preamble signal;
determining the second reception information corresponding to the first signal according to the resource location and the signal format of the first preamble signal; or
determining the second reception information corresponding to the first signal according to a reception rule for the first preamble signal.

In some embodiments, the reception rule for the first preamble signal includes at least one of the following:
when the number of times the first preamble signal is received within a time window is greater than or equal to a first threshold, determining that the first signal is received at a resource location of the first signal;
when the number of times the first preamble signal is received within a time window is less than a second threshold, determining that the first signal is received at the resource location of the first signal;
when the number of times the first preamble signal is received within a time window is less than the first threshold, determining that the first signal is not received at the resource location of the first signal;
when the number of times the first preamble signal is received within a time window is greater than or equal to the second threshold, determining that the first signal is not received at the resource location of the first signal;
when a received power of the first preamble signal is greater than or equal to a third threshold, determining that the first signal is received at the resource location of the first signal;
when the received power of the first preamble signal is less than a fourth threshold, determining that the first signal is received at the resource location of the first signal;
when the received power of the first preamble signal is less than the third threshold, determining that the first signal is not received at the resource location of the first signal;
when the received power of the first preamble signal is greater than or equal to the fourth threshold, determining that the first signal is not received at the resource location of the first signal.

In some embodiments, the synchronization accuracy of the first synchronization information includes at least one of the following:
a reception time domain deviation of the target preamble signal and/or the first signal meets an eleventh threshold;
a reception frequency domain deviation of the target preamble signal and/or the first signal meets a twelfth threshold;
a false alarm probability of the target preamble signal and/or the first signal meets a thirteenth threshold; or
a missed detection probability of the target preamble signal and/or the first signal meets a fourteenth threshold;
   and/or
the synchronization accuracy of the second synchronization information includes at least one of the following:
   the reception time domain deviation of the target preamble signal and/or the first signal meets a fifteenth threshold;
   the reception frequency domain deviation of the target preamble signal and/or the first signal meets a sixteenth threshold;
   the false alarm probability of the target preamble signal and/or the first signal meets a seventeenth threshold; or
   the missed detection probability of the target preamble signal and/or the first signal meets an eighteenth threshold;
   wherein, the eleventh threshold is greater than the fifteenth threshold, the twelfth threshold is greater than the sixteenth threshold, the thirteenth threshold is greater than the seventeenth threshold, and the fourteenth threshold is greater than the eighteenth threshold.

In some embodiments, the apparatus further includes:
a second sending unit, configured to send a parameter related to the receiving capability of the low power wake up receiver and/or a measurement parameter to the network device.

In some embodiments, the parameter related to the receiving capability of the low power wake up receiver includes at least one of the following:
receiver type;
receiver sensitivity;
received signal type;
receiver bandwidth; or
signal receiving frequency.

In some embodiments, the measurement parameter includes at least one of the following:
a reference signal received power of the target preamble signal and/or a second signal; or
a reference signal received quality of the target preamble signal and/or the second signal.

In some embodiments, the second signal includes at least one of the following:
synchronization signal/PBCH block; or
channel state information reference signal.

In some embodiments, the first signal includes a wake up signal.

It should be noted that the apparatus embodiment is an apparatus in a one-to-one correspondence with the above-mentioned method embodiment. All implementations in the above-mentioned method embodiment are applicable to the apparatus embodiment and can achieve the same technical effects.

It should be noted that the division of units in the embodiments of the present disclosure is schematic and is merely a logical functional division. In actual implementation, other division methods may be used. Furthermore, the functional units in the various embodiments of the present disclosure may be integrated into a single processing unit, or each unit may exist physically separately, or two or more units may be integrated into a single unit. The aforementioned integrated units may be implemented in the form of hardware or software functional units.

If the integrated unit is implemented in the form of a software functional unit and sold or used as an independent product, it can be stored in a processor-readable storage medium. Based on this understanding, the technical solution of the present disclosure, or the part that contributes to the relevant technology, or all or part of the technical solution can be embodied in the form of a software product. The computer software product is stored in a storage medium and includes several instructions for enabling a computer device (which can be a personal computer, server, or network device, etc.) or a processor to execute all or part of the steps of the method described in each embodiment of the present disclosure. The aforementioned storage medium includes: USB drive, removable hard disk, read-only memory (ROM), random access memory (RAM), magnetic disk or optical disc, and other media that can store program codes.

As shown in Fig. 5, an embodiment of the present disclosure further provides a terminal, including a processor 500, a transceiver 510, a memory 520, and a program stored in the memory 520 and executable on the processor 500. The transceiver 510 is connected to the processor 500 and the memory 520 via a bus interface. The processor 500 is configured to read the program in the memory and execute the following process:
receiving a target preamble signal through the transceiver, wherein the target preamble signal is used by the terminal to receive a first signal;
obtaining target synchronization information and/or resource location information of the first signal according to the target preamble signal.

The transceiver 510 is configured to receive and send data under the control of the processor 500.

In Fig. 5, the bus architecture may include any number of interconnected buses and bridges, various circuits such as one or more processors specifically represented by processor 500 and memory represented by memory 520 are connected together. The bus architecture may also connect various other circuits such as peripheral devices, voltage regulators, and power management circuits, which are well known in the art and are therefore not further described herein. The bus interface provides an interface. The transceiver 510 may be a plurality of components, including a transmitter and a receiver, providing a unit for communicating with various other devices on a transmission medium, such as a wireless channel, a wired channel, an optical cable, and the like. For different user equipments, the user interface 530 may also be an interface capable of connecting external or internal devices as required, and the connected devices include but are not limited to a keypad, a display, a speaker, a microphone, a joystick, and the like.

The processor 500 is responsible for managing the bus architecture and general processing, and the memory 520 can store data used by the processor 500 when performing operations.

In some embodiments, the processor 500 may be a central processing unit (CPU), an application specific integrated circuit (ASIC), a field programmable gate array (FPGA), or a complex programmable logic device (CPLD). The processor may also adopt a multi-core architecture.

The processor is configured to implement any of the methods provided by the embodiments of the present disclosure according to the obtained executable instructions by calling the computer program stored in the memory. The processor and the memory can also be arranged physically separately.

In some embodiments, the target preamble signal includes at least one of the following: a reference signal, a synchronization signal, a dedicated signal for a low power wake up receiver, downlink data, or a control signal; and/or
the first signal includes at least one of the following: a reference signal, a synchronization signal, a dedicated signal for a low power wake up receiver, downlink data, or a control signal.

In some embodiments, the target preamble signal includes: a first preamble signal and/or a second preamble signal;
the target synchronization information includes: first synchronization information and/or second synchronization information; wherein, the first synchronization information is determined according to the first preamble signal, and the second synchronization information is determined according to the second preamble signal; the first synchronization information and the second synchronization information indicate different respective synchronization accuracies.

In some embodiments, in a case that the target preamble signal includes the first preamble signal and the second preamble signal, the processor is configured to read the computer program in the memory and perform the following steps:
obtaining first synchronization information according to the first preamble signal;
obtaining the second synchronization information and/or the resource location information of the first signal according to the second preamble signal.

In some embodiments, in a case that the target preamble signal includes the second preamble signal, the processor is configured to read the computer program in the memory and perform the following step:
obtaining the second synchronization information and/or the resource location information of the first signal according to the second preamble signal.

In some embodiments, the processor is configured to read the computer program in the memory and perform the following step:
determining the resource location information of the first signal according to first reception information corresponding to the second preamble signal.

In some embodiments, the processor is configured to read the computer program in the memory and perform at least one of the following steps:
determining a reception start position in the resource location information of the first signal based on a reception position in the first reception information corresponding to the second preamble signal;
determining the resource location information of the first signal based on sequence information in the first reception information corresponding to the second preamble signal.

In some embodiments, the processor is configured to read the computer program in the memory to further perform the following step:
obtaining configuration parameters of resource locations of the first signal and the second preamble signal in a first manner;
wherein the first manner includes at least one of the following:
   as defined in a protocol, according to a radio resource control (RRC) configuration, as indicated by a control channel, or as indicated by a data channel.

In some embodiments, the configuration parameters of the resource locations of the first signal and the second preamble signal include at least one of the following:
a time domain start position offset of the second preamble signal relative to the first signal;
a frequency domain start position offset of the second preamble signal relative to the first signal;
a relationship between periods of the second preamble signal and the first signal;
a time domain symbol pattern occupied by the second preamble signal in transmission resources;
a time domain symbol pattern occupied by the first signal in transmission resources;
a frequency domain subcarrier pattern occupied by the second preamble signal in transmission resources; or
a frequency domain subcarrier pattern occupied by the first signal in transmission resources.

In some embodiments, the processor is configured to read the computer program in the memory to further perform the following step:
in a case that the second preamble signal is successfully received at a resource location corresponding to the second preamble signal, determining to receive the first signal at a resource location of the first signal.

In some embodiments, in a case that the target preamble signal includes the first preamble signal, the processor is configured to read the computer program in the memory and perform the following step:
obtaining the first synchronization information according to the first preamble signal.

In some embodiments, the processor is configured to read the computer program in the memory to further perform the following step:
obtaining a configuration parameter of a resource location of the first signal in a second manner;
wherein the second manner includes at least one of the following:
   as defined in a protocol, according to an RRC configuration, as indicated by a control channel, or as indicated by a data channel.

In some embodiments, the processor is configured to read the computer program in the memory to further perform the following step:
receiving target configuration information of the target preamble signal;
wherein the target configuration information includes first configuration information and/or second configuration information;
the first configuration information is used for configuring the first preamble signal;
the second configuration information is used for configuring the second preamble signal.

In some embodiments, in a case that the target configuration information includes the first configuration information and the second configuration information, the first configuration information and the second configuration information satisfy at least one of the following:
the first configuration information and the second configuration information are configured separately; or
one of the first configuration information and the second configuration information is determined based on the other of the first configuration information and the second configuration information and an association configuration parameter.

In some embodiments, the association configuration parameter includes at least one of the following:
a time domain offset of the first preamble signal relative to the second preamble signal;
a frequency domain offset of the first preamble signal relative to the second preamble signal; or
a relationship between reception periods of the first preamble signal and the second preamble signal.

In some embodiments, the target configuration information includes at least one of the following:
reception period;
time domain duration;
frequency domain duration;
time domain start position;
frequency domain start position;
time domain end position;
frequency domain end position; or
a reception window parameter for an aperiodic signal.

In some embodiments, the target configuration information is configured based on at least one of the following:
configured per terminal;
configured per terminal group; or
configured per cell.

In some embodiments, the target configuration information is obtained in at least one of the following manners:
as defined in a protocol, as configured by RRC signaling, as configured by a control channel, or as configured by a data channel.

In some embodiments, in a case that the target preamble signal includes the first preamble signal and the second preamble signal, the processor is configured to read the computer program in the memory to further perform at least one of the following steps:
determining resource location information of the second preamble signal according to the first preamble signal; or
determining second reception information corresponding to the first signal according to the first preamble signal.

In some embodiments, in a case that the target preamble signal includes the first preamble signal, the processor is configured to read the computer program in the memory to further perform the following step:
determining second reception information corresponding to the first signal according to the first preamble signal.

In some embodiments, the second reception information corresponding to the first signal includes at least one of the following:
a length of the first signal;
a code rate of the first signal;
the first signal is received at a resource location of the first signal; or
the resource location of the first signal is skipped.

In some embodiments, the processor is configured to read the computer program in the memory to further perform at least one of the following steps:
obtaining a configuration parameter of a resource location of the first signal in a third manner, and determining the resource location information of the first signal according to the configuration parameter of the resource location; or
determining the resource location information of the first signal according to a resource location of the first preamble signal;
wherein the third manner includes at least one of the following:
   as defined in a protocol, according to an RRC configuration, as indicated by a control channel, or as indicated by a data channel.

In some embodiments, the configuration parameter of the resource location of the first signal includes at least one of the following:
a reception period of the first signal;
a time domain position parameter of the first signal;
a frequency domain position parameter of the first signal;
a length of the first signal; or
a reception window parameter for an aperiodic first signal.

In some embodiments, the reception window parameter includes at least one of the following:
window period, duration, window start time, or reception window valid time.

In some embodiments, the reception window valid time is used for indicating one or more of a time length for receiving the first preamble signal in a reception window, a time length for receiving the second preamble signal in a reception window, and a time length for receiving the first signal in a reception window.

In some embodiments, the processor is configured to read the computer program in the memory and perform at least one of the following steps:
determining the second reception information corresponding to the first signal according to a signal format of the first preamble signal;
determining the second reception information corresponding to the first signal according to a resource location of the first preamble signal;
determining the second reception information corresponding to the first signal according to the resource location and the signal format of the first preamble signal; or
determining the second reception information corresponding to the first signal according to a reception rule for the first preamble signal.

In some embodiments, the reception rule for the first preamble signal includes at least one of the following:
when the number of times the first preamble signal is received within a time window is greater than or equal to a first threshold, determining that the first signal is received at a resource location of the first signal;
when the number of times the first preamble signal is received within a time window is less than a second threshold, determining that the first signal is received at the resource location of the first signal;
when the number of times the first preamble signal is received within a time window is less than the first threshold, determining that the first signal is not received at the resource location of the first signal;
when the number of times the first preamble signal is received within a time window is greater than or equal to the second threshold, determining that the first signal is not received at the resource location of the first signal;
when a received power of the first preamble signal is greater than or equal to a third threshold, determining that the first signal is received at the resource location of the first signal;
when the received power of the first preamble signal is less than a fourth threshold, determining that the first signal is received at the resource location of the first signal;
when the received power of the first preamble signal is less than the third threshold, determining that the first signal is not received at the resource location of the first signal; or
when the received power of the first preamble signal is greater than or equal to the fourth threshold, determining that the first signal is not received at the resource location of the first signal.

In some embodiments, the synchronization accuracy of the first synchronization information includes at least one of the following:
a reception time domain deviation of the target preamble signal and/or the first signal meets an eleventh threshold;
a reception frequency domain deviation of the target preamble signal and/or the first signal meets a twelfth threshold;
a false alarm probability of the target preamble signal and/or the first signal meets a thirteenth threshold; or
a missed detection probability of the target preamble signal and/or the first signal meets a fourteenth threshold;
   and/or
the synchronization accuracy of the second synchronization information includes at least one of the following:
   the reception time domain deviation of the target preamble signal and/or the first signal meets a fifteenth threshold;
   the reception frequency domain deviation of the target preamble signal and/or the first signal meets a sixteenth threshold;
   the false alarm probability of the target preamble signal and/or the first signal meets a seventeenth threshold; or
   the missed detection probability of the target preamble signal and/or the first signal meets an eighteenth threshold;
   wherein, the eleventh threshold is greater than the fifteenth threshold, the twelfth threshold is greater than the sixteenth threshold, the thirteenth threshold is greater than the seventeenth threshold, and the fourteenth threshold is greater than the eighteenth threshold.

In some embodiments, the processor is configured to read the computer program in the memory to further perform the following step:
sending a parameter related to a receiving capability of a low power wake up receiver and/or a measurement parameter to a network device.

In some embodiments, the parameter related to the receiving capability of the low power wake up receiver includes at least one of the following:
receiver type;
receiver sensitivity;
received signal type;
receiver bandwidth; or
signal receiving frequency.

In some embodiments, the measurement parameter includes at least one of the following:
a reference signal received power of the target preamble signal and/or a second signal; or
a reference signal received quality of the target preamble signal and/or the second signal.

In some embodiments, the second signal includes at least one of the following:
synchronization signal/PBCH block; or
channel state information reference signal.

In some embodiments, the first signal includes a wake up signal.

It should be noted here that the above-mentioned terminal provided in the embodiment of the present disclosure can implement all the method steps implemented in the above-mentioned method embodiment and can achieve the same technical effects. The parts and beneficial effects of this embodiment that are the same as those in the method embodiment will not be described in detail here.

The present disclosure also provides a computer-readable storage medium having a computer program stored thereon, wherein when the computer program is executed by a processor, the computer program implements the steps of the information transmission method applied to a terminal. The processor-readable storage medium can be any available medium or data storage device that can be accessed by the processor, including but not limited to magnetic storage (such as a floppy disk, a hard disk, a magnetic tape, a magneto-optical disc (MO), etc.), optical storage (such as a compact disc (CD), a digital video disc (DVD), a Blu-ray disc (BD), a high-definition versatile disc (HVD), etc.), and semiconductor storage (such as a read-only memory (ROM), an erasable programmable read-only memory (EPROM), an electrically erasable programmable read-only memory (EEPROM), a non-volatile memory (NAND FLASH), a solid-state disk (SSD), etc.).

As shown in Fig. 6, an embodiment of the present disclosure provides an information transmission apparatus 600, which is applied to a network device and includes:
a first sending unit 601, configured to send a target preamble signal to a terminal;
wherein the target preamble signal is used by the terminal to receive a first signal.

In some embodiments, the target preamble signal includes at least one of the following: a reference signal, a synchronization signal, a dedicated signal for a low power wake up receiver, downlink data, or a control signal; and/or
the first signal includes at least one of the following: a reference signal, a synchronization signal, a dedicated signal for a low power wake up receiver, downlink data, or a control signal.

In some embodiments, the target preamble signal includes: a first preamble signal and/or a second preamble signal;
the target synchronization information includes: first synchronization information and/or second synchronization information; wherein, the first synchronization information is determined according to the first preamble signal, and the second synchronization information is determined according to the second preamble signal; the first synchronization information and the second synchronization information indicate different respective synchronization accuracies.

In some embodiments, the apparatus further includes:
a third sending unit, configured to send configuration parameters of resource locations of the first signal and the second preamble signal to the terminal through the first signaling;
wherein the first signaling includes at least one of the following:
   radio resource control (RRC) signaling, a control channel, or a data channel.

In some embodiments, the configuration parameters of the resource locations of the first signal and the second preamble signal include at least one of the following:
a time domain start position offset of the second preamble signal relative to the first signal;
a frequency domain start position offset of the second preamble signal relative to the first signal;
a relationship between periods of the second preamble signal and the first signal;
a time domain symbol pattern occupied by the second preamble signal and/or the first signal in transmission resources; or
a frequency domain subcarrier pattern occupied by the second preamble signal and/or the first signal in transmission resources.

In some embodiments, the apparatus further includes:
a fourth sending unit, configured to send a configuration parameter of a resource location of the first signal to the terminal through the target object;
wherein the target object includes at least one of the following:
   radio resource control (RRC) signaling, a control channel, or a data channel.

In some embodiments, the configuration parameter of the resource location of the first signal includes at least one of the following:
a reception period of the first signal;
a time domain position parameter of the first signal;
a frequency domain position parameter of the first signal;
a length of the first signal; or
a reception window parameter for an aperiodic first signal.

In some embodiments, the reception window parameter includes at least one of the following:
window period, duration, window start time, or reception window valid time.

In some embodiments, the reception window valid time is used for indicating one or more of a time length for receiving the first preamble signal in a reception window, a time length for receiving the second preamble signal in a reception window, and a time length for receiving the first signal in a reception window.

In some embodiments, the apparatus further includes:
a fifth sending unit, configured to send target configuration information of a target preamble signal to the terminal;
wherein the target configuration information includes first configuration information and/or second configuration information;
the first configuration information is used for configuring the first preamble signal;
the second configuration information is used for configuring the second preamble signal.

In some embodiments, in a case that the target configuration information includes the first configuration information and the second configuration information, the first configuration information and the second configuration information satisfy at least one of the following:
the first configuration information and the second configuration information are configured separately; or
one of the first configuration information and the second configuration information is determined based on the other of the first configuration information and the second configuration information and an association configuration parameter.

In some embodiments, the association configuration parameter includes at least one of the following:
a time domain offset of the first preamble signal relative to the second preamble signal;
a frequency domain offset of the first preamble signal relative to the second preamble signal; or
a relationship between reception periods of the first preamble signal and the second preamble signal.

In some embodiments, the target configuration information includes at least one of the following:
reception period;
time domain duration;
frequency domain duration;
time domain start position;
frequency domain start position;
time domain end position;
frequency domain end position; or
a reception window parameter for an aperiodic signal.

In some embodiments, the target configuration information is configured based on at least one of the following:
configured per terminal;
configured per terminal group; or
configured per cell.

In some embodiments, the synchronization accuracy of the first synchronization information includes at least one of the following:
a reception time domain deviation of the target preamble signal and/or the first signal meets an eleventh threshold;
a reception frequency domain deviation of the target preamble signal and/or the first signal meets a twelfth threshold;
a false alarm probability of the target preamble signal and/or the first signal meets a thirteenth threshold; or
a missed detection probability of the target preamble signal and/or the first signal meets a fourteenth threshold;
   and/or
the synchronization accuracy of the second synchronization information includes at least one of the following:
   the reception time domain deviation of the target preamble signal and/or the first signal meets a fifteenth threshold;
   the reception frequency domain deviation of the target preamble signal and/or the first signal meets a sixteenth threshold;
   the false alarm probability of the target preamble signal and/or the first signal meets a seventeenth threshold; or
   the missed detection probability of the target preamble signal and/or the first signal meets an eighteenth threshold;
   wherein, the eleventh threshold is greater than the fifteenth threshold, the twelfth threshold is greater than the sixteenth threshold, the thirteenth threshold is greater than the seventeenth threshold, and the fourteenth threshold is greater than the eighteenth threshold.

In some embodiments, the apparatus further includes:
a third receiving unit, configured to receive a parameter related to the receiving capability of the low power consumption receiver and/or a measurement parameter from the terminal.

In some embodiments, the parameter related to the receiving capability of the low power wake up receiver includes at least one of the following:
receiver type;
receiver sensitivity;
received signal type;
receiver bandwidth; or
signal receiving frequency.

In some embodiments, the measurement parameter includes at least one of the following:
a reference signal received power of the target preamble signal and/or a second signal; or
a reference signal received quality of the target preamble signal and/or the second signal.

In some embodiments, the second signal includes at least one of the following:
synchronization signal/PBCH block; or
channel state information reference signal.

In some embodiments, in a case that the target preamble signal includes the first preamble signal, the first sending unit 601 is configured to:
send the first preamble signal to the terminal periodically or aperiodically.

In some embodiments, a specific implementation of aperiodically sending the first preamble signal to the terminal includes:
periodically sending the first preamble signal in a first window that is defined in a protocol or preconfigured;
wherein a start position of the first window is determined by a service arrival time, and an end time of the first window is determined by the maximum number of times the first preamble signal is sent and/or the time when an uplink signal sent by the terminal is received.

In some embodiments, in a case that the target preamble signal includes the second preamble signal, the first sending unit 601 is configured to:
send the second preamble signal to the terminal periodically or aperiodically.

In some embodiments, the specific implementation of aperiodically sending the second preamble signal to the terminal includes:
periodically sending the second preamble signal in a second window that is defined in a protocol or preconfigured;
wherein a start position of the second window is determined by a service arrival time, and an end time of the second window is determined by the maximum number of times the second preamble signal is sent and/or the time when an uplink signal sent by the terminal is received.

In some embodiments, in a case that the target preamble signal includes the first preamble signal and the second preamble signal, the first sending unit 601 is configured to:
send the first preamble signal and the second preamble signal separately to the terminal.

In some embodiments, the apparatus further includes:
a sixth sending unit, configured to send the first signal to the terminal periodically or aperiodically.

In some embodiments, the specific implementation of aperiodically sending the first signal to the terminal includes:
periodically sending the first signal in a third window that is defined in a protocol or preconfigured;
wherein a start position of the third window is determined by a service arrival time, and an end time of the third window is determined by the maximum number of times the first signal is sent and/or the time when an uplink signal sent by the terminal is received.

In some embodiments, the first signal includes a wake up signal.

It should be noted that the apparatus embodiment is an apparatus in a one-to-one correspondence with the above-mentioned method embodiment. All implementations in the above-mentioned method embodiment are applicable to the apparatus embodiment and can achieve the same technical effects.

It should be noted that the division of units in the embodiments of the present disclosure is schematic and is merely a logical functional division. In actual implementation, other division methods may be used. Furthermore, the functional units in the various embodiments of the present disclosure may be integrated into a single processing unit, or each unit may exist physically separately, or two or more units may be integrated into a single unit. The aforementioned integrated units may be implemented in the form of hardware or software functional units.

If the integrated unit is implemented in the form of a software functional unit and sold or used as an independent product, it can be stored in a processor-readable storage medium. Based on this understanding, the technical solution of the present disclosure, or the part that contributes to the relevant technology, or all or part of the technical solution can be embodied in the form of a software product. The computer software product is stored in a storage medium and includes several instructions for enabling a computer device (which can be a personal computer, server, or network device, etc.) or a processor to execute all or part of the steps of the method described in each embodiment of the present disclosure. The aforementioned storage medium includes: USB drive, removable hard disk, read-only memory (ROM), random access memory (RAM), magnetic disk or optical disc, and other media that can store program codes.

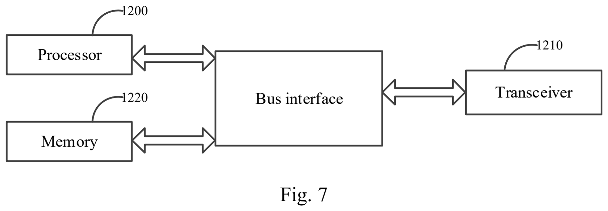

As shown in Fig. 7, an embodiment of the present disclosure further provides a network device, including a processor 700, a transceiver 710, a memory 720, and a program stored in the memory 720 and executable on the processor 700; wherein the transceiver 710 is connected to the processor 700 and the memory 720 via a bus interface, wherein the processor 700 is configured to read the program in the memory and execute the following process:
sending a target preamble signal to a terminal via the transceiver;
wherein the target preamble signal is used by the terminal to receive a first signal.

The transceiver 710 is configured to receive and send data under the control of the processor 700.

In Fig. 7, the bus architecture may include any number of interconnected buses and bridges, and various circuits such as one or more processors specifically represented by processor 700 and memory represented by memory 720 are connected together. The bus architecture may also connect various other circuits such as peripheral devices, voltage regulators, and power management circuits, which are well known in the art and are therefore not further described herein. The bus interface provides an interface. The transceiver 710 may be a plurality of components, i.e., a transmitter and a receiver, providing a unit for communicating with various other devices on a transmission medium, such as a wireless channel, a wired channel, an optical cable, and the like. For different user equipments, the user interface 730 may also be an interface capable of connecting external or internal devices as required, and the connected devices include but are not limited to a keypad, a display, a speaker, a microphone, a joystick, and the like.

The processor 700 is responsible for managing the bus architecture and general processing, and the memory 720 can store data used by the processor 700 when performing operations.

In some embodiments, the processor 700 may be a CPU, an ASIC, an FPGA, or a CPLD, and the processor 700 may also adopt a multi-core architecture.

The processor is configured to implement any of the methods provided by the embodiments of the present disclosure according to the obtained executable instructions by calling the computer program stored in the memory. The processor and the memory can also be arranged physically separately.

In some embodiments, the target preamble signal includes at least one of the following: a reference signal, a synchronization signal, a dedicated signal for a low power wake up receiver, downlink data, or a control signal; and/or
the first signal includes at least one of the following: a reference signal, a synchronization signal, a dedicated signal for a low power wake up receiver, downlink data, or a control signal.

In some embodiments, the target preamble signal includes: a first preamble signal and/or a second preamble signal;
the target synchronization information includes: first synchronization information and/or second synchronization information; wherein, the first synchronization information is determined according to the first preamble signal, and the second synchronization information is determined according to the second preamble signal; the first synchronization information and the second synchronization information indicate different respective synchronization accuracies.

In some embodiments, the processor is configured to read the computer program in the memory to further perform the following step:
sending configuration parameters of resource locations of the first signal and the second preamble signal to the terminal through a first signaling;
wherein the first signaling includes at least one of the following:
   radio resource control (RRC) signaling, a control channel, or a data channel.

In some embodiments, the configuration parameters of the resource locations of the first signal and the second preamble signal include at least one of the following:
a time domain start position offset of the second preamble signal relative to the first signal;
a frequency domain start position offset of the second preamble signal relative to the first signal;
a relationship between periods of the second preamble signal and the first signal;
a time domain symbol pattern occupied by the second preamble signal and/or the first signal in transmission resources; or
a frequency domain subcarrier pattern occupied by the second preamble signal and/or the first signal in transmission resources.

In some embodiments, the processor is configured to read the computer program in the memory to further perform the following step:
sending a configuration parameter of a resource location of the first signal to the terminal through a target object;
wherein the target object includes at least one of the following:
   radio resource control (RRC) signaling, a control channel, or a data channel.

In some embodiments, the configuration parameter of the resource location of the first signal includes at least one of the following:
a reception period of the first signal;
a time domain position parameter of the first signal;
a frequency domain position parameter of the first signal;
a length of the first signal; or
a reception window parameter for an aperiodic first signal.

In some embodiments, the reception window parameter includes at least one of the following:
window period, duration, window start time, or reception window valid time.

In some embodiments, the reception window valid time is used for indicating one or more of a time length for receiving the first preamble signal in a reception window, a time length for receiving the second preamble signal in a reception window, and a time length for receiving the first signal in a reception window.

In some embodiments, the processor is configured to read the computer program in the memory to further perform the following step:
sending target configuration information of a target preamble signal to the terminal;
wherein the target configuration information includes first configuration information and/or second configuration information;
the first configuration information is used for configuring the first preamble signal;
the second configuration information is used for configuring the second preamble signal.

In some embodiments, in a case that the target configuration information includes the first configuration information and the second configuration information, the first configuration information and the second configuration information satisfy at least one of the following:
the first configuration information and the second configuration information are configured separately; or
one of the first configuration information and the second configuration information is determined based on the other of the first configuration information and the second configuration information and an association configuration parameter.

In some embodiments, the association configuration parameter includes at least one of the following:
a time domain offset of the first preamble signal relative to the second preamble signal;
a frequency domain offset of the first preamble signal relative to the second preamble signal; or
a relationship between reception periods of the first preamble signal and the second preamble signal.

In some embodiments, the target configuration information includes at least one of the following:
reception period;
time domain duration;
frequency domain duration;
time domain start position;
frequency domain start position;
time domain end position;
frequency domain end position; or
a reception window parameter for an aperiodic signal.

In some embodiments, the target configuration information is configured based on at least one of the following:
configured per terminal;
configured per terminal group; or
configured per cell.

In some embodiments, the synchronization accuracy of the first synchronization information includes at least one of the following:
a reception time domain deviation of the target preamble signal and/or the first signal meets an eleventh threshold;
a reception frequency domain deviation of the target preamble signal and/or the first signal meets a twelfth threshold;
a false alarm probability of the target preamble signal and/or the first signal meets a thirteenth threshold; or
the target preamble signal and/or the first signal meets a fourteenth threshold;
   and/or
the synchronization accuracy of the second synchronization information includes at least one of the following:
   the reception time domain deviation of the target preamble signal and/or the first signal meets a fifteenth threshold;
   the reception frequency domain deviation of the target preamble signal and/or the first signal meets a sixteenth threshold;
   the false alarm probability of the target preamble signal and/or the first signal meets a seventeenth threshold; or
   the missed detection probability of the target preamble signal and/or the first signal meets an eighteenth threshold;
   wherein, the eleventh threshold is greater than the fifteenth threshold, the twelfth threshold is greater than the sixteenth threshold, the thirteenth threshold is greater than the seventeenth threshold, and the fourteenth threshold is greater than the eighteenth threshold.

In some embodiments, the processor is configured to read the computer program in the memory to further perform the following step:
receiving a parameter related to a receiving capability of a low power wake up receiver and/or a measurement parameter from the terminal.

In some embodiments, the parameter related to the receiving capability of the low power wake up receiver includes at least one of the following:
receiver type;
receiver sensitivity;
received signal type;
receiver bandwidth; or
signal receiving frequency.

In some embodiments, the measurement parameter includes at least one of the following:
a reference signal received power of the target preamble signal and/or a second signal; or
a reference signal received quality of the target preamble signal and/or the second signal.

In some embodiments, the second signal includes at least one of the following:
synchronization signal/PBCH block; or
channel state information reference signal.

In some embodiments, in a case that the target preamble signal includes the first preamble signal, the processor is configured to read the computer program in the memory and perform the following step:
sending the first preamble signal to the terminal periodically or aperiodically.

In some embodiments, the processor is configured to read the computer program in the memory and perform the following step:
periodically sending the first preamble signal in a first window that is defined in a protocol or preconfigured;
wherein a start position of the first window is determined by a service arrival time, and an end time of the first window is determined by the maximum number of times the first preamble signal is sent and/or the time when an uplink signal sent by the terminal is received.

In some embodiments, in a case that the target preamble signal includes the second preamble signal, the processor is configured to read the computer program in the memory and perform the following step:
sending the second preamble signal to the terminal periodically or aperiodically.

In some embodiments, the processor is configured to read the computer program in the memory and perform the following step:
periodically sending the second preamble signal in a second window that is defined in a protocol or preconfigured;
wherein a start position of the second window is determined by a service arrival time, and an end time of the second window is determined by the maximum number of times the second preamble signal is sent and/or the time when an uplink signal sent by the terminal is received.

In some embodiments, in a case that the target preamble signal includes the first preamble signal and the second preamble signal, the processor is configured to read the computer program in the memory and perform the following step:
sending the first preamble signal and the second preamble signal separately to the terminal.

In some embodiments, the processor is configured to read the computer program in the memory and perform the following step:
sending the first signal to the terminal periodically or aperiodically.

In some embodiments, the processor is configured to read the computer program in the memory and perform the following step:
periodically sending the first signal in a third window that is defined in a protocol or preconfigured;
wherein a start position of the third window is determined by a service arrival time, and an end time of the third window is determined by the maximum number of times the first signal is sent and/or the time when an uplink signal sent by the terminal is received.

In some embodiments, the first signal includes a wake up signal.

It should be noted here that the above-mentioned network device provided in the embodiment of the present disclosure can implement all the method steps implemented in the above-mentioned method embodiment and can achieve the same technical effect. The parts and beneficial effects of this embodiment that are the same as those in the method embodiment will not be described in detail here.

The present disclosure also provides a computer-readable storage medium having a computer program stored thereon, wherein when the computer program is executed by a processor, the computer program implements the steps of the information transmission method applied to a network device. The processor-readable storage medium can be any available medium or data storage device that the processor can access, including but not limited to magnetic storage (such as floppy disks, hard disks, magnetic tapes, magneto-optical discs (MOs), etc.), optical storage (such as CDs, DVDs, BDs, HVDs, etc.), and semiconductor storage (such as ROMs, EPROMs, EEPROMs, non-volatile memories (NAND FLASH), solid-state drives (SSDs), etc.).

Those skilled in the art will appreciate that embodiments of the present disclosure may be provided as methods, systems, or computer program products. Thus, the present disclosure may take the form of an entirely hardware embodiment, an entirely software embodiment, or an embodiment combining software and hardware. Furthermore, the present disclosure may take the form of a computer program product implemented on one or more computer-usable storage media (including but not limited to magnetic disk storage and optical storage) containing computer-usable program code.

The present disclosure is described with reference to flowcharts and/or block diagrams of methods, devices (systems), and computer program products according to embodiments of the present disclosure. It should be understood that each process and/or block in the flowcharts and/or block diagrams, as well as combinations of processes and/or blocks in the flowcharts and/or block diagrams, can be implemented by computer-executable instructions. These computer-executable instructions can be provided to a processor of a general-purpose computer, a special-purpose computer, an embedded processor, or other programmable data processing device to produce a machine, such that the instructions executed by the processor of the computer or other programmable data processing device produce a device for implementing the functions specified in one or more processes in the flowcharts and/or one or more blocks in the block diagrams.

These processor-executable instructions may also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more boxes in the block diagram.

These processor-executable instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more processes in the flowchart and/or one or more boxes in the block diagram.

It should be noted that it should be understood that the division of the above modules is merely a division of logical functions. In actual implementation, they can be fully or partially integrated into one physical entity, or they can be physically separated. Moreover, these modules can all be implemented in the form of software called by a processing element; or they can all be implemented in the form of hardware; or some modules can be implemented in the form of software called by a processing element, and some modules can be implemented in the form of hardware. For example, the determination module can be a separately established processing element, or it can be integrated into a chip of the above-mentioned device. In addition, it can also be stored in the memory of the above-mentioned device in the form of program code, and called by a processing element of the above-mentioned device to perform the functions of the above-mentioned determination module. The implementation of other modules is similar. In addition, these modules can all or partly be integrated together, or they can be implemented separately. The processing element described here can be an integrated circuit with signal processing capabilities. In the implementation process, each step of the above method or each of the above modules can be completed by the hardware integrated logic circuit in the processor element or by instructions in the form of software.

For example, each module, unit, sub-unit, or sub-module may be one or more integrated circuits configured to implement the above method, such as one or more application-specific integrated circuits (ASICs), one or more digital signal processors (DSPs), or one or more field programmable gate arrays (FPGAs). For another example, when a module is implemented by scheduling program code on a processing element, the processing element may be a general-purpose processor, such as a central processing unit (CPU) or other processor capable of calling program code. For another example, these modules may be integrated together and implemented in the form of a system-on-a-chip (SOC).

The terms "first", "second", and the like in the specification and claims of the present disclosure are used to distinguish similar objects and are not necessarily used to describe a specific order or precedence. It should be understood that the terms used in this manner are interchangeable where appropriate, so that the embodiments of the present disclosure described herein may be implemented in a sequence other than that illustrated or described herein. In addition, the terms "including" and "having", and any variations thereof, are intended to cover non-exclusive inclusions. For example, a process, method, system, product, or device that includes a series of steps or units need not be limited to those steps or units explicitly listed, but may include other steps or units that are not explicitly listed or that are inherent to these processes, methods, products, or devices. In addition, the use of "and/or" in the specification and claims to indicate at least one of the connected objects, for example, A and/or B and/or C, means that seven situations are included: A alone, B alone, C alone, both A and B present, both B and C present, both A and C present, and all A, B, and C present. Similarly, the use of "at least one of A or B" in the specification and claims should be understood to mean "A alone, B alone, or both A and B present."

Obviously, those skilled in the art may make various changes and modifications to the present disclosure without departing from the spirit and scope of the present disclosure. Thus, if these modifications and variations of the present disclosure fall within the scope of the claims of the present disclosure and their equivalents, the present disclosure is intended to include these modifications and variations.

## Claims

1. An information transmission method, performed by a terminal, comprising:
receiving a target preamble signal, wherein the target preamble signal is used by the terminal to receive a first signal; and
obtaining target synchronization information and/or resource location information of the first signal according to the target preamble signal.

2. The method according to claim 1, wherein the target preamble signal comprises: a first preamble signal and/or a second preamble signal;
the target synchronization information comprises: first synchronization information and/or second synchronization information; wherein the first synchronization information is determined according to the first preamble signal, and the second synchronization information is determined according to the second preamble signal; the first synchronization information and the second synchronization information indicate different respective synchronization accuracies.

3. The method according to claim 2, wherein, in a case that the target preamble signal comprises the first preamble signal and the second preamble signal, obtaining the target synchronization information and/or the resource location information of the first signal according to the target preamble signal comprises:
obtaining the first synchronization information according to the first preamble signal; and
obtaining the second synchronization information and/or the resource location information of the first signal according to the second preamble signal.

4. The method according to claim 2, wherein, in a case that the target preamble signal comprises the second preamble signal, obtaining the target synchronization information and/or the resource location information of the first signal according to the target preamble signal comprises:
obtaining the second synchronization information and/or the resource location information of the first signal according to the second preamble signal.

5. The method according to claim 3 or 4, wherein obtaining the resource location information of the first signal according to the second preamble signal comprises:
determining the resource location information of the first signal according to first reception information corresponding to the second preamble signal.

6. The method according to claim 5, wherein determining the resource location information of the first signal according to the first reception information corresponding to the second preamble signal comprises at least one of the following:
determining a reception start position in the resource location information of the first signal based on a reception position in the first reception information corresponding to the second preamble signal; or
determining the resource location information of the first signal based on sequence information in the first reception information corresponding to the second preamble signal.

7. The method according to claim 3 or 4, further comprising:
obtaining configuration parameters of resource locations of the first signal and the second preamble signal in a first manner;
wherein the first manner comprises at least one of the following:
as defined in a protocol, according to a radio resource control (RRC) configuration, as indicated by a control channel, or as indicated by a data channel.

8. The method according to claim 7, wherein the configuration parameters of the resource locations of the first signal and the second preamble signal comprise at least one of the following:
a time domain start position offset of the second preamble signal relative to the first signal;
a frequency domain start position offset of the second preamble signal relative to the first signal;
a relationship between periods of the second preamble signal and the first signal;
a time domain symbol pattern occupied by the second preamble signal in transmission resources;
a time domain symbol pattern occupied by the first signal in transmission resources;
a frequency domain subcarrier pattern occupied by the second preamble signal in transmission resources; or
a frequency domain subcarrier pattern occupied by the first signal in transmission resources.

9. The method according to claim 3 or 4, further comprising:
in a case that the second preamble signal is successfully received at a resource location corresponding to the second preamble signal, determining to receive the first signal at a resource location of the first signal.

10. The method according to claim 2, wherein, in a case that the target preamble signal comprises the first preamble signal, obtaining the target synchronization information and/or the resource location information of the first signal according to the target preamble signal comprises:
obtaining the first synchronization information according to the first preamble signal.

11. The method according to claim 10, further comprising:
obtaining a configuration parameter of a resource location of the first signal in a second manner;
wherein the second manner comprises at least one of the following:
as defined in a protocol, according to an RRC configuration, as indicated by a control channel, or as indicated by a data channel.

12. The method according to claim 2, further comprising:
receiving target configuration information of the target preamble signal;
wherein the target configuration information comprises first configuration information and/or second configuration information;
the first configuration information is used for configuring the first preamble signal;
the second configuration information is used for configuring the second preamble signal.

13. The method according to claim 12, wherein, in a case that the target configuration information comprises the first configuration information and the second configuration information, the first configuration information and the second configuration information satisfy at least one of the following:
the first configuration information and the second configuration information are configured separately; or
one of the first configuration information and the second configuration information is determined based on the other of the first configuration information and the second configuration information and an association configuration parameter.

14. The method according to claim 13, wherein the association configuration parameter comprises at least one of the following:
a time domain offset of the first preamble signal relative to the second preamble signal;
a frequency domain offset of the first preamble signal relative to the second preamble signal; or
a relationship between reception periods of the first preamble signal and the second preamble signal.

15. The method according to claim 12, wherein the target configuration information comprises at least one of the following:
reception period;
time domain duration;
frequency domain duration;
time domain start position;
frequency domain start position;
time domain end position;
frequency domain end position; or
a reception window parameter for an aperiodic signal.

16. The method according to claim 12, wherein the target configuration information is configured based on at least one of the following:
configured per terminal;
configured per terminal group; or
configured per cell.

17. The method according to claim 12, wherein the target configuration information is obtained in at least one of the following manners:
as defined in a protocol, as configured by RRC signaling, as configured by a control channel, or as configured by a data channel.

18. The method according to claim 2, wherein, in a case that the target preamble signal comprises the first preamble signal and the second preamble signal, the method further comprises at least one of the following:
determining resource location information of the second preamble signal according to the first preamble signal; or
determining second reception information corresponding to the first signal according to the first preamble signal.

19. The method according to claim 2, wherein, in a case that the target preamble signal comprises the first preamble signal, the method further comprises:
determining second reception information corresponding to the first signal according to the first preamble signal.

20. The method according to claim 18 or 19, wherein the second reception information corresponding to the first signal comprises at least one of the following:
a length of the first signal;
a code rate of the first signal;
the first signal is received at a resource location of the first signal; or
the resource location of the first signal is skipped.

21. The method according to claim 18 or 19, further comprising at least one of the following:
obtaining a configuration parameter of a resource location of the first signal in a third manner, and determining the resource location information of the first signal according to the configuration parameter of the resource location; or
determining the resource location information of the first signal according to a resource location of the first preamble signal;
wherein the third manner comprises at least one of the following:
as defined in a protocol, according to an RRC configuration, as indicated by a control channel, or as indicated by a data channel.

22. The method according to claim 11 or 21, wherein the configuration parameter of the resource location of the first signal comprises at least one of the following:
a reception period of the first signal;
a time domain position parameter of the first signal;
a frequency domain position parameter of the first signal;
a length of the first signal; or
a reception window parameter for an aperiodic first signal.

23. The method according to claim 15 or 22, wherein the reception window parameter comprises at least one of the following:
window period, duration, window start time, or reception window valid time.

24. The method according to claim 23, wherein the reception window valid time is used for indicating one or more of a time length for receiving the first preamble signal in a reception window, a time length for receiving the second preamble signal in a reception window, and a time length for receiving the first signal in a reception window.

25. The method according to claim 18 or 19, wherein determining the second reception information corresponding to the first signal according to the first preamble signal comprises at least one of the following:
determining the second reception information corresponding to the first signal according to a signal format of the first preamble signal;
determining the second reception information corresponding to the first signal according to a resource location of the first preamble signal;
determining the second reception information corresponding to the first signal according to the resource location and the signal format of the first preamble signal; or
determining the second reception information corresponding to the first signal according to a reception rule for the first preamble signal.

26. The method according to claim 25, wherein the reception rule for the first preamble signal comprises at least one of the following:
when the number of times the first preamble signal is received within a time window is greater than or equal to a first threshold, determining that the first signal is received at a resource location of the first signal;
when the number of times the first preamble signal is received within a time window is less than a second threshold, determining that the first signal is received at the resource location of the first signal;
when the number of times the first preamble signal is received within a time window is less than the first threshold, determining that the first signal is not received at the resource location of the first signal;
when the number of times the first preamble signal is received within a time window is greater than or equal to the second threshold, determining that the first signal is not received at the resource location of the first signal;
when a received power of the first preamble signal is greater than or equal to a third threshold, determining that the first signal is received at the resource location of the first signal;
when the received power of the first preamble signal is less than a fourth threshold, determining that the first signal is received at the resource location of the first signal;
when the received power of the first preamble signal is less than the third threshold, determining that the first signal is not received at the resource location of the first signal; or
when the received power of the first preamble signal is greater than or equal to the fourth threshold, determining that the first signal is not received at the resource location of the first signal.

27. The method according to claim 2, wherein the synchronization accuracy of the first synchronization information comprises at least one of the following:
a reception time domain deviation of the target preamble signal and/or the first signal meets an eleventh threshold;
a reception frequency domain deviation of the target preamble signal and/or the first signal meets a twelfth threshold;
a false alarm probability of the target preamble signal and/or the first signal meets a thirteenth threshold; or
a missed detection probability of the target preamble signal and/or the first signal meets a fourteenth threshold;
and/or
the synchronization accuracy of the second synchronization information comprises at least one of the following:
the reception time domain deviation of the target preamble signal and/or the first signal meets a fifteenth threshold;
the reception frequency domain deviation of the target preamble signal and/or the first signal meets a sixteenth threshold;
the false alarm probability of the target preamble signal and/or the first signal meets a seventeenth threshold; or
the missed detection probability of the target preamble signal and/or the first signal meets an eighteenth threshold;
wherein, the eleventh threshold is greater than the fifteenth threshold, the twelfth threshold is greater than the sixteenth threshold, the thirteenth threshold is greater than the seventeenth threshold, and the fourteenth threshold is greater than the eighteenth threshold.

28. The method according to any one of claims 1 to 27, further comprising:
sending a parameter related to a receiving capability of a low power wake up receiver and/or a measurement parameter to a network device.

29. The method according to claim 28, wherein the parameter related to the receiving capability of the low power wake up receiver comprises at least one of the following:
receiver type;
receiver sensitivity;
received signal type;
receiver bandwidth; or
signal receiving frequency.

30. The method according to claim 28, wherein the measurement parameter comprises at least one of the following:
a reference signal received power of the target preamble signal and/or a second signal; or
a reference signal received quality of the target preamble signal and/or the second signal.

31. The method according to claim 30, wherein the second signal comprises at least one of the following:
synchronization signal/PBCH block; or
channel state information reference signal.

32. The method according to any one of claims 1 to 31, wherein the first signal comprises a wake up signal.

33. The method according to any one of claims 1 to 31, wherein the target preamble signal comprises at least one of the following: a reference signal, a synchronization signal, a dedicated signal for a low power wake up receiver, downlink data, or a control signal; and/or
the first signal comprises at least one of the following: a reference signal, a synchronization signal, a dedicated signal for a low power wake up receiver, downlink data, or a control signal.

34. An information transmission method, performed by a network device, comprising:
sending a target preamble signal to a terminal;
wherein the target preamble signal is used by the terminal to receive a first signal.

35. The method according to claim 34, wherein the target preamble signal comprises: a first preamble signal and/or a second preamble signal;
the target synchronization information comprises: first synchronization information and/or second synchronization information; wherein, the first synchronization information is determined according to the first preamble signal, and the second synchronization information is determined according to the second preamble signal; the first synchronization information and the second synchronization information indicate different respective synchronization accuracies.

36. The method according to claim 35, further comprising:
sending configuration parameters of resource locations of the first signal and the second preamble signal to the terminal through a first signaling;
wherein the first signaling comprises at least one of the following:
radio resource control (RRC) signaling, a control channel, or a data channel.

37. The method according to claim 36, wherein the configuration parameters of the resource locations of the first signal and the second preamble signal comprise at least one of the following:
a time domain start position offset of the second preamble signal relative to the first signal;
a frequency domain start position offset of the second preamble signal relative to the first signal;
a relationship between periods of the second preamble signal and the first signal;
a time domain symbol pattern occupied by the second preamble signal and/or the first signal in transmission resources; or
a frequency domain subcarrier pattern occupied by the second preamble signal and/or the first signal in transmission resources.

38. The method according to claim 35, further comprising:
sending a configuration parameter of a resource location of the first signal to the terminal through a target object;
wherein the target object comprises at least one of the following:
RRC signaling, a control channel, or a data channel.

39. The method according to claim 38, wherein the configuration parameter of the resource location of the first signal comprises at least one of the following:
a reception period of the first signal;
a time domain position parameter of the first signal;
a frequency domain position parameter of the first signal;
a length of the first signal; or
a reception window parameter for an aperiodic first signal.

40. The method according to claim 39, wherein the reception window parameter comprises at least one of the following:
window period, duration, window start time, or reception window valid time.

41. The method according to claim 40, wherein the reception window valid time is used for indicating one or more of a time length for receiving the first preamble signal in a reception window, a time length for receiving the second preamble signal in a reception window, and a time length for receiving the first signal in a reception window.

42. The method according to claim 35, further comprising:
sending target configuration information of a target preamble signal to the terminal;
wherein the target configuration information comprises first configuration information and/or second configuration information;
the first configuration information is used for configuring the first preamble signal;
the second configuration information is used for configuring the second preamble signal.

43. The method according to claim 42, wherein, in a case that the target configuration information comprises the first configuration information and the second configuration information, the first configuration information and the second configuration information satisfy at least one of the following:
the first configuration information and the second configuration information are configured separately; or
one of the first configuration information and the second configuration information is determined based on the other of the first configuration information and the second configuration information and an association configuration parameter.

44. The method according to claim 43, wherein the association configuration parameter comprises at least one of the following:
a time domain offset of the first preamble signal relative to the second preamble signal;
a frequency domain offset of the first preamble signal relative to the second preamble signal; or
a relationship between reception periods of the first preamble signal and the second preamble signal.

45. The method according to claim 42, wherein the target configuration information comprises at least one of the following:
reception period;
time domain duration;
frequency domain duration;
time domain start position;
frequency domain start position;
time domain end position;
frequency domain end position; or
a reception window parameter for an aperiodic signal.

46. The method according to claim 42, wherein the target configuration information is configured based on at least one of the following:
configured per terminal;
configured per terminal group; or
configured per cell.

47. The method according to claim 35, wherein the synchronization accuracy of the first synchronization information comprises at least one of the following:
a reception time domain deviation of the target preamble signal and/or the first signal meets an eleventh threshold;
a reception frequency domain deviation of the target preamble signal and/or the first signal meets a twelfth threshold;
a false alarm probability of the target preamble signal and/or the first signal meets a thirteenth threshold;
a missed detection probability of the target preamble signal and/or the first signal meets a fourteenth threshold;
and/or
the synchronization accuracy of the second synchronization information comprises at least one of the following:
the reception time domain deviation of the target preamble signal and/or the first signal meets a fifteenth threshold;
the reception frequency domain deviation of the target preamble signal and/or the first signal meets a sixteenth threshold;
the false alarm probability of the target preamble signal and/or the first signal meets a seventeenth threshold; or
the missed detection probability of the target preamble signal and/or the first signal meets an eighteenth threshold;
wherein, the eleventh threshold is greater than the fifteenth threshold, the twelfth threshold is greater than the sixteenth threshold, the thirteenth threshold is greater than the seventeenth threshold, and the fourteenth threshold is greater than the eighteenth threshold.

48. The method according to any one of claims 34 to 47, further comprising:
receiving a parameter related to a receiving capability of a low power wake up receiver and/or a measurement parameter from the terminal.

49. The method according to claim 48, wherein the parameter related to the receiving capability of the low power wake up receiver comprises at least one of the following:
receiver type;
receiver sensitivity;
received signal type;
receiver bandwidth; or
signal receiving frequency.

50. The method according to claim 48, wherein the measurement parameter comprises at least one of the following:
a reference signal received power of the target preamble signal and/or a second signal; or
a reference signal received quality of the target preamble signal and/or the second signal.

51. The method according to claim 50, wherein the second signal comprises at least one of the following:
synchronization signal/PBCH block; or
channel state information reference signal.

52. The method according to any one of claims 35 to 51, wherein, in a case that the target preamble signal comprises the first preamble signal, sending the target preamble signal to the terminal comprises:
sending the first preamble signal to the terminal periodically or aperiodically.

53. The method according to claim 52, wherein sending the first preamble signal to the terminal aperiodically comprises:
periodically sending the first preamble signal in a first window that is defined in a protocol or preconfigured;
wherein a start position of the first window is determined by a service arrival time, and an end time of the first window is determined by the maximum number of times the first preamble signal is sent and/or the time when an uplink signal sent by the terminal is received.

54. The method according to any one of claims 35 to 51, wherein, in a case that the target preamble signal comprises the second preamble signal, sending the target preamble signal to the terminal comprises:
sending the second preamble signal to the terminal periodically or aperiodically.

55. The method according to claim 54, wherein sending the second preamble signal to the terminal aperiodically comprises:
periodically sending the second preamble signal in a second window that is defined in a protocol or preconfigured;
wherein a start position of the second window is determined by a service arrival time, and an end time of the second window is determined by the maximum number of times the second preamble signal is sent and/or the time when an uplink signal sent by the terminal is received.

56. The method according to any one of claims 35 to 51, wherein, in a case that the target preamble signal comprises the first preamble signal and the second preamble signal, sending the target preamble signal to the terminal comprises: sending the first preamble signal and the second preamble signal separately to the terminal.

57. The method according to any one of claims 34 to 51, further comprising:
sending the first signal to the terminal periodically or aperiodically.

58. The method according to claim 57, wherein sending the first signal to the terminal aperiodically comprises:
periodically sending the first signal in a third window that is defined in a protocol or preconfigured;
wherein a start position of the third window is determined by a service arrival time, and an end time of the third window is determined by the maximum number of times the first signal is sent and/or the time when an uplink signal sent by the terminal is received.

59. The method according to any one of claims 34 to 58, wherein the first signal comprises a wake up signal.

60. The method according to any one of claims 34 to 58, wherein the target preamble signal comprises at least one of the following: a reference signal, a synchronization signal, a dedicated signal for a low power wake up receiver, downlink data, or a control signal; and/or
the first signal comprises at least one of the following: a reference signal, a synchronization signal, a dedicated signal for a low power wake up receiver, downlink data, or a control signal.

61. A terminal comprising a memory, a transceiver, and a processor;
wherein the memory is configured to store a computer program; the transceiver is configured to transmit and receive data under the control of the processor; and the processor is configured to read the computer program in the memory and perform the following steps:
receiving a target preamble signal through the transceiver, wherein the target preamble signal is used by the terminal to receive a first signal; and
obtaining target synchronization information and/or resource location information of the first signal according to the target preamble signal.

62. The terminal according to claim 61, wherein the target preamble signal comprises: a first preamble signal and/or a second preamble signal;
the target synchronization information comprises: first synchronization information and/or second synchronization information; wherein, the first synchronization information is determined according to the first preamble signal, and the second synchronization information is determined according to the second preamble signal; the first synchronization information and the second synchronization information indicate different respective synchronization accuracies.

63. The terminal according to claim 62, wherein, in a case that the target preamble signal comprises the first preamble signal and the second preamble signal, the processor is configured to read the computer program in the memory and perform the following steps:
obtaining first synchronization information according to the first preamble signal; and
obtaining the second synchronization information and/or the resource location information of the first signal according to the second preamble signal.

64. The terminal according to claim 62, wherein, in a case that the target preamble signal comprises the second preamble signal, the processor is configured to read the computer program in the memory and perform the following step:
obtaining the second synchronization information and/or the resource location information of the first signal according to the second preamble signal.

65. The terminal according to claim 63 or 64, wherein the processor is configured to read the computer program in the memory and perform the following step:
determining the resource location information of the first signal according to first reception information corresponding to the second preamble signal.

66. The terminal according to claim 65, wherein the processor is configured to read the computer program in the memory and perform at least one of the following steps:
determining a reception start position in the resource location information of the first signal based on a reception position in the first reception information corresponding to the second preamble signal; or
determining the resource location information of the first signal based on sequence information in the first reception information corresponding to the second preamble signal.

67. The terminal according to claim 63 or 64, wherein the processor is configured to read the computer program in the memory and further perform the following step:
obtaining configuration parameters of resource locations of the first signal and the second preamble signal in a first manner;
wherein the first manner comprises at least one of the following:
as defined in a protocol, according to a radio resource control (RRC) configuration, as indicated by a control channel, or as indicated by a data channel.

68. The terminal according to claim 67, wherein the configuration parameters of the resource locations of the first signal and the second preamble signal comprise at least one of the following:
a time domain start position offset of the second preamble signal relative to the first signal;
a frequency domain start position offset of the second preamble signal relative to the first signal;
a relationship between periods of the second preamble signal and the first signal;
a time domain symbol pattern occupied by the second preamble signal in transmission resources;
a time domain symbol pattern occupied by the first signal in transmission resources;
a frequency domain subcarrier pattern occupied by the second preamble signal in transmission resources; or
a frequency domain subcarrier pattern occupied by the first signal in transmission resources.

69. The terminal according to claim 63 or 64, wherein the processor is configured to read the computer program in the memory and further perform the following step:
in a case that the second preamble signal is successfully received at a resource location corresponding to the second preamble signal, determining to receive the first signal at a resource location of the first signal.

70. The terminal according to claim 62, wherein, in a case that the target preamble signal comprises the first preamble signal, the processor is configured to read the computer program in the memory and perform the following step:
obtaining the first synchronization information according to the first preamble signal.

71. The terminal according to claim 70, wherein the processor is configured to read the computer program in the memory and further perform the following step:
obtaining a configuration parameter of a resource location of the first signal in a second manner;
wherein the second manner comprises at least one of the following:
as defined in a protocol, according to an RRC configuration, as indicated by a control channel, or as indicated by a data channel.

72. The terminal according to claim 62, wherein the processor is configured to read the computer program in the memory and further perform the following step:
receiving target configuration information of the target preamble signal;
wherein the target configuration information comprises first configuration information and/or second configuration information;
the first configuration information is used for configuring the first preamble signal;
the second configuration information is used for configuring the second preamble signal.

73. The terminal according to claim 72, wherein, in a case that the target configuration information comprises the first configuration information and the second configuration information, the first configuration information and the second configuration information satisfy at least one of the following:
the first configuration information and the second configuration information are configured separately; or
one of the first configuration information and the second configuration information is determined based on the other of the first configuration information and the second configuration information and an association configuration parameter.

74. The terminal according to claim 73, wherein the association configuration parameter comprises at least one of the following:
a time domain offset of the first preamble signal relative to the second preamble signal;
a frequency domain offset of the first preamble signal relative to the second preamble signal; or
a relationship between reception periods of the first preamble signal and the second preamble signal.

75. The terminal according to claim 72, wherein the target configuration information comprises at least one of the following:
reception period;
time domain duration;
frequency domain duration;
time domain start position;
frequency domain start position;
time domain end position;
frequency domain end position; or
a reception window parameter for an aperiodic signal.

76. The terminal according to claim 72, wherein the target configuration information is configured based on at least one of the following:
configured per terminal;
configured per terminal group; or
configured per cell.

77. The terminal according to claim 72, wherein the target configuration information is obtained in at least one of the following manners:
as defined in a protocol, as configured by RRC signaling, as configured by a control channel, or as configured by a data channel.

78. The terminal according to claim 62, wherein, in a case that the target preamble signal comprises the first preamble signal and the second preamble signal, the processor is configured to read the computer program in the memory and further perform at least one of the following steps:
determining resource location information of the second preamble signal according to the first preamble signal; or
determining second reception information corresponding to the first signal according to the first preamble signal.

79. The terminal according to claim 62, wherein, in a case that the target preamble signal comprises the first preamble signal, the processor is configured to read the computer program in the memory and further perform the following step:
determining second reception information corresponding to the first signal according to the first preamble signal.

80. The terminal according to claim 78 or 79, wherein the second reception information corresponding to the first signal comprises at least one of the following:
a length of the first signal;
a code rate of the first signal;
the first signal is received at a resource location of the first signal; or
the resource location of the first signal is skipped.

81. The terminal according to claim 78 or 79, wherein the processor is configured to read the computer program in the memory and further perform at least one of the following steps:
obtaining a configuration parameter of a resource location of the first signal in a third manner, and determining the resource location information of the first signal according to the configuration parameter of the resource location; or
determining the resource location information of the first signal according to a resource location of the first preamble signal;
wherein the third manner comprises at least one of the following:
as defined in a protocol, according to an RRC configuration, as indicated by a control channel, or as indicated by a data channel.

82. The terminal according to claim 71 or 81, wherein the configuration parameter of the resource location of the first signal comprises at least one of the following:
a reception period of the first signal;
a time domain position parameter of the first signal;
a frequency domain position parameter of the first signal;
a length of the first signal; or
a reception window parameter for an aperiodic first signal.

83. The terminal according to claim 75 or 82, wherein the reception window parameter comprises at least one of the following:
window period, duration, window start time, or reception window valid time.

84. The terminal according to claim 83, wherein the reception window valid time is used for indicating one or more of a time length for receiving the first preamble signal in a reception window, a time length for receiving the second preamble signal in a reception window, and a time length for receiving the first signal in a reception window.

85. The terminal according to claim 78 or 79, wherein the processor is configured to read the computer program in the memory and perform at least one of the following steps:
determining the second reception information corresponding to the first signal according to a signal format of the first preamble signal;
determining the second reception information corresponding to the first signal according to a resource location of the first preamble signal;
determining the second reception information corresponding to the first signal according to the resource location and the signal format of the first preamble signal; or
determining the second reception information corresponding to the first signal according to a reception rule for the first preamble signal.

86. The terminal according to claim 85, wherein the reception rule for the first preamble signal comprises at least one of the following:
when the number of times the first preamble signal is received within a time window is greater than or equal to a first threshold, determining that the first signal is received at a resource location of the first signal;
when the number of times the first preamble signal is received within a time window is less than a second threshold, determining that the first signal is received at the resource location of the first signal;
when the number of times the first preamble signal is received within a time window is less than the first threshold, determining that the first signal is not received at the resource location of the first signal;
when the number of times the first preamble signal is received within a time window is greater than or equal to the second threshold, determining that the first signal is not received at the resource location of the first signal;
when a received power of the first preamble signal is greater than or equal to a third threshold, determining that the first signal is received at the resource location of the first signal;
when the received power of the first preamble signal is less than a fourth threshold, determining that the first signal is received at the resource location of the first signal;
when the received power of the first preamble signal is less than the third threshold, determining that the first signal is not received at the resource location of the first signal; or
when the received power of the first preamble signal is greater than or equal to the fourth threshold, determining that the first signal is not received at the resource location of the first signal.

87. The terminal according to claim 62, wherein the synchronization accuracy of the first synchronization information comprises at least one of the following:
a reception time domain deviation of the target preamble signal and/or the first signal meets an eleventh threshold;
a reception frequency domain deviation of the target preamble signal and/or the first signal meets a twelfth threshold;
a false alarm probability of the target preamble signal and/or the first signal meets a thirteenth threshold; or
a missed detection probability of the target preamble signal and/or the first signal meets a fourteenth threshold;
and/or
the synchronization accuracy of the second synchronization information comprises at least one of the following:
the reception time domain deviation of the target preamble signal and/or the first signal meets a fifteenth threshold;
the reception frequency domain deviation of the target preamble signal and/or the first signal meets a sixteenth threshold;
the false alarm probability of the target preamble signal and/or the first signal meets a seventeenth threshold; or
the missed detection probability of the target preamble signal and/or the first signal meets an eighteenth threshold;
wherein, the eleventh threshold is greater than the fifteenth threshold, the twelfth threshold is greater than the sixteenth threshold, the thirteenth threshold is greater than the seventeenth threshold, and the fourteenth threshold is greater than the eighteenth threshold.

88. The terminal according to any one of claims 61 to 87, wherein the processor is configured to read the computer program in the memory and further perform the following step:
sending a parameter related to a receiving capability of a low power wake up receiver and/or a measurement parameter to a network device.

89. The terminal according to claim 88, wherein the parameter related to the receiving capability of the low power wake up receiver comprises at least one of the following:
receiver type;
receiver sensitivity;
received signal type;
receiver bandwidth; or
signal receiving frequency.

90. The terminal according to claim 88, wherein the measurement parameter comprises at least one of the following:
a reference signal received power of the target preamble signal and/or a second signal; or
a reference signal received quality of the target preamble signal and/or the second signal.

91. The terminal according to claim 90, wherein the second signal comprises at least one of the following:
synchronization signal/PBCH block; or
channel state information reference signal.

92. The terminal according to any one of claims 61 to 91, wherein the first signal comprises a wake up signal.

93. The terminal according to any one of claims 61 to 91, wherein the target preamble signal comprises at least one of the following: a reference signal, a synchronization signal, a dedicated signal for a low power wake up receiver, downlink data, or a control signal; and/or
the first signal comprises at least one of the following: a reference signal, a synchronization signal, a dedicated signal for a low power wake up receiver, downlink data, or a control signal.

94. A network device comprising a memory, a transceiver, and a processor; wherein the memory is configured to store a computer program; the transceiver is configured to transmit and receive data under the control of the processor; and the processor is configured to read the computer program in the memory and perform the following steps:
sending a target preamble signal to a terminal via the transceiver;
wherein the target preamble signal is used by the terminal to receive a first signal.

95. The network device according to claim 94, wherein the target preamble signal comprises: a first preamble signal and/or a second preamble signal;
the target synchronization information comprises: first synchronization information and/or second synchronization information; wherein, the first synchronization information is determined according to the first preamble signal, and the second synchronization information is determined according to the second preamble signal; the first synchronization information and the second synchronization information indicate different respective synchronization accuracies.

96. The network device according to claim 95, wherein the processor is configured to read the computer program in the memory and further perform the following step:
sending configuration parameters of resource locations of the first signal and the second preamble signal to the terminal through a first signaling;
wherein the first signaling comprises at least one of the following:
radio resource control (RRC) signaling, a control channel, or a data channel.

97. The network device according to claim 96, wherein the configuration parameters of the resource locations of the first signal and the second preamble signal comprise at least one of the following:
a time domain start position offset of the second preamble signal relative to the first signal;
a frequency domain start position offset of the second preamble signal relative to the first signal;
a relationship between periods of the second preamble signal and the first signal;
a time domain symbol pattern occupied by the second preamble signal and/or the first signal in transmission resources; or
a frequency domain subcarrier pattern occupied by the second preamble signal and/or the first signal in transmission resources.

98. The network device according to claim 95, wherein the processor is configured to read the computer program in the memory and further perform the following step:
sending a configuration parameter of a resource location of the first signal to the terminal through a target object;
wherein the target object comprises at least one of the following:
radio resource control (RRC) signaling, a control channel, or a data channel.

99. The network device according to claim 98, wherein the configuration parameter of the resource location of the first signal comprises at least one of the following:
a reception period of the first signal;
a time domain position parameter of the first signal;
a frequency domain position parameter of the first signal;
a length of the first signal; or
a reception window parameter for an aperiodic first signal.

100. The network device according to claim 99, wherein the receive window parameter comprises at least one of the following:
window period, duration, window start time, or reception window valid time.

101. The network device according to claim 100, wherein the reception window valid time is used for indicating one or more of a time length for receiving the first preamble signal in a reception window, a time length for receiving the second preamble signal in a reception window, and a time length for receiving the first signal in a reception window.

102. The network device according to claim 95, wherein the processor is configured to read the computer program in the memory and further perform the following step:
sending target configuration information of a target preamble signal to the terminal;
wherein the target configuration information comprises first configuration information and/or second configuration information;
the first configuration information is used for configuring the first preamble signal;
the second configuration information is used for configuring the second preamble signal.

103. The network device according to claim 102, wherein, in a case that the target configuration information comprises the first configuration information and the second configuration information, the first configuration information and the second configuration information satisfy at least one of the following:
the first configuration information and the second configuration information are configured separately; or
one of the first configuration information and the second configuration information is determined based on the other of the first configuration information and the second configuration information and an association configuration parameter.

104. The network device according to claim 103, wherein the association configuration parameter comprises at least one of the following:
a time domain offset of the first preamble signal relative to the second preamble signal;
a frequency domain offset of the first preamble signal relative to the second preamble signal; or
a relationship between reception periods of the first preamble signal and the second preamble signal.

105. The network device according to claim 102, wherein the target configuration information comprises at least one of the following:
reception period;
time domain duration;
frequency domain duration;
time domain start position;
frequency domain start position;
time domain end position;
frequency domain end position; or
a reception window parameter for an aperiodic signal.

106. The network device according to claim 102, wherein the target configuration information is configured based on at least one of the following:
configured per terminal;
configured per terminal group; or
configured per cell.

107. The network device according to claim 95, wherein the synchronization accuracy of the first synchronization information comprises at least one of the following:
a reception time domain deviation of the target preamble signal and/or the first signal meets an eleventh threshold;
a reception frequency domain deviation of the target preamble signal and/or the first signal meets a twelfth threshold;
a false alarm probability of the target preamble signal and/or the first signal meets a thirteenth threshold; or
a missed detection probability of the target preamble signal and/or the first signal meets a fourteenth threshold;
and/or
the synchronization accuracy of the second synchronization information comprises at least one of the following:
the reception time domain deviation of the target preamble signal and/or the first signal meets a fifteenth threshold;
the reception frequency domain deviation of the target preamble signal and/or the first signal meets a sixteenth threshold;
the false alarm probability of the target preamble signal and/or the first signal meets a seventeenth threshold; or
the missed detection probability of the target preamble signal and/or the first signal meets an eighteenth threshold;
wherein, the eleventh threshold is greater than the fifteenth threshold, the twelfth threshold is greater than the sixteenth threshold, the thirteenth threshold is greater than the seventeenth threshold, and the fourteenth threshold is greater than the eighteenth threshold.

108. The network device according to any one of claims 94 to 107, wherein the processor is configured to read the computer program in the memory and further perform the following step:
receiving a parameter related to a receiving capability of a low power wake up receiver and/or a measurement parameter from the terminal.

109. The network device according to claim 108, wherein the parameter related to the receiving capability of the low power wake up receiver comprises at least one of the following:
receiver type;
receiver sensitivity;
received signal type;
receiver bandwidth; or
signal receiving frequency.

110. The network device according to claim 108, wherein the measurement parameter comprises at least one of the following:
a reference signal received power of the target preamble signal and/or a second signal; or
a reference signal received quality of the target preamble signal and/or the second signal.

111. The network device according to claim 110, wherein the second signal comprises at least one of the following:
synchronization signal/PBCH block; or
channel state information reference signal.

112. The network device according to any one of claims 95 to 111, wherein, in a case that the target preamble signal comprises the first preamble signal, the processor is configured to read a computer program in the memory and perform the following step:
sending the first preamble signal to the terminal periodically or aperiodically.

113. The network device according to claim 112, wherein the processor is configured to read the computer program in the memory and perform the following step:
periodically sending the first preamble signal in a first window that is defined in a protocol or preconfigured;
wherein a start position of the first window is determined by a service arrival time, and an end time of the first window is determined by the maximum number of times the first preamble signal is sent and/or the time when an uplink signal sent by the terminal is received.

114. The network device according to any one of claims 95 to 111, wherein, in a case that the target preamble signal comprises the second preamble signal, the processor is configured to read a computer program in the memory and perform the following step:
sending the second preamble signal to the terminal periodically or aperiodically.

115. The network device according to claim 114, wherein the processor is configured to read the computer program in the memory and perform the following step:
periodically sending the second preamble signal in a second window that is defined in a protocol or preconfigured;
wherein a start position of the second window is determined by a service arrival time, and an end time of the second window is determined by the maximum number of times the second preamble signal is sent and/or the time when an uplink signal sent by the terminal is received.

116. The network device according to any one of claims 95 to 111, wherein, in a case that the target preamble signal comprises the first preamble signal and the second preamble signal, the processor is configured to read a computer program in the memory and perform the following step:
sending the first preamble signal and the second preamble signal separately to the terminal.

117. The network device according to any one of claims 94 to 111, wherein the processor is configured to read the computer program in the memory and perform the following step:
sending the first signal to the terminal periodically or aperiodically.

118. The network device according to claim 117, wherein the processor is configured to read the computer program in the memory and perform the following step:
periodically sending the first signal in a third window that is defined in a protocol or preconfigured;
wherein a start position of the third window is determined by a service arrival time, and an end time of the third window is determined by the maximum number of times the first signal is sent and/or the time when an uplink signal sent by the terminal is received.

119. The network device according to any one of claims 94 to 118, wherein the first signal comprises a wake up signal.

120. The network device according to any one of claims 94 to 118, wherein the target preamble signal comprises at least one of the following: a reference signal, a synchronization signal, a dedicated signal for a low power wake up receiver, downlink data, or a control signal; and/or
the first signal comprises at least one of the following: a reference signal, a synchronization signal, a dedicated signal for a low power wake up receiver, downlink data, or a control signal.

121. An information transmission apparatus, applied to a terminal, comprising:
a first receiving unit, configured to receive a target preamble signal, wherein the target preamble signal is used by the terminal to receive a first signal; and
a first obtaining unit, configured to obtain target synchronization information and/or resource location information of the first signal according to the target preamble signal.

122. An information transmission apparatus, applied to a network device, comprising:
a first sending unit, configured to send a target preamble signal to a terminal;
wherein the target preamble signal is used by the terminal to receive a first signal.

123. A processor-readable storage medium storing a computer program, wherein the computer program is configured to cause a processor to execute the method according to any one of claims 1 to 60.
